# EUROPEAN PATENT SPECIFICATION

(11) **EP 3 414 956 B1**
(45) Date of publication and mention of the grant of the patent: **09.12.2020**
(21) Application number: 17704917.8
(22) Date of filing: 31.01.2017
(51) Int. Cl.: H04W 60/00, G06F 21/44, H04W 4/70

(54) **ATTACH WITHOUT PDN CONNECTIVITY**
VERBINDUNG OHNE PDN-KONNEKTIVITÄT
RATTACHEMENT SANS CONNECTIVITÉ DE PDN

(30) Priority: 10.02.2016 US 201662293735 P
(43) Date of publication of application: 19.12.2018
(60) Divisional application: 20205238.7
(73) Proprietor: Intel IP Corporation, Santa Clara, CA 95054 (US)
(72) Inventor: ZAUS, Robert, 80686 München (DE); GUPTA, Vivek, San Jose, CA 95138 (US); JAIN, Puneet, Hillsboro, OR 97124 (US)
(74) Representative: Goddar, Heinz J.
(86) International application number: PCT/US2017/015756
(87) International publication number: WO 2017/139130

(56) References cited:
- EP-A1- 2 713 664
- US-A1- 2012 294 236
- US-A1- 2015 257 115
- US-A1- 2015 264 739
- "Universal Mobile Telecommunications System (UMTS); LTE; Non-Access-Stratum (NAS) protocol for Evolved Packet System (EPS); Stage 3 (3GPP TS 24.301 version 13.4.0 Release 13)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP CT 1, no. V13.4.0, 1 January 2016 (2016-01-01), XP014265879,

## Description

### TECHNICAL FIELD

This disclosure generally relates to attaching mobile devices to a cellular communication network without the need to establish PDN connectivity. The principles of this disclosure may be for example advantageously used in 3^{rd} Generation Partnership Program (3GPP) Long Term Evolution (LTE)-based cellular networks.

### BACKGROUND

Machine type communication (MTC) represents a significant growth opportunity for the 3GPP ecosystem. To support Internet of Things (IoT), 3GPP operators have to address usage scenarios with devices that are power efficient (with battery life of several years), can be reached in challenging coverage conditions e.g. indoor and basements and, more importantly, are cheap enough so that they can be deployed on a mass scale and even be disposable. The 3GPP Rel-13 stage-3 work-item (CIoT-CT) across the CT1/CT3/CT4/CT6 working groups of the 3GPP's Technical Specification Group Core Network and Terminals (TSG CT) is intended to carry out architecture enhancements to support highly efficient handling of frequent and infrequent small data transmissions with minimized overhead for system signaling without compromising e.g. security, support power consumption optimizations, simplify mobility and session management procedures and support paging optimizations.

US 2015/0257115 A1 discloses an apparatus and method in which a User Equipment (UE) can register with a wireless network without requiring a packet data connection to be established. A UE can indicate to a Mobility Management Entity that a packet data connection is not required to be established immediately. This can free resources when the UE knows that it will not need to transmit or receive data for some time, which is often the case for UE using Machine to Machine communication. The MME can delay the establishment of a data connection for a UE if there are temporarily not enough resources to support it.

EP 2 713 664 A1 shows a method of attaching a UE to a network node of a wireless telecommunications network. The method comprises determining that the UE requires to remain attached to the network node even without a PDN connection between the user equipment and the network; and transmitting an evolved packet data system attach request message to the network node, the evolved packet data system attach request message encoding an indication that the user equipment requires to remain attached to the network node even without a PDN connection.

### SUMMARY

The invention is defined by the subject matter of the independent claims. Advantageous embodiments are subject to the dependent claims. Embodiments not falling under the scope of one of the dependent claims are to be considered examples useful for understanding the invention.

### BRIEF DESCIPTION OF THE DRAWINGS

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.
- **Fig. 1**: shows an example flow of messages exchanged between a UE and a Mobility Management Entity (MME) for attaching the UE without PDN connection to a 3GPP LTE-based cellular network according to embodiments;
- **Fig. 2**: shows another example flow of messages exchanged between a UE and a Mobility Management Entity (MME) for attaching the UE without PDN connection to a 3GPP LTE-based cellular network according to embodiments;
- **Fig. 3**: shows a further example flow of messages exchanged between a UE and a Mobility Management Entity (MME) for an unsuccessful attach of the UE without PDN connection to a 3GPP LTE-based cellular network according to embodiments;
- **Fig. 4**: shows an example flow of messages exchanged between a UE and a Mobility Management Entity (MME) for performing a Tracking Area Update (TAU) in a 3GPP LTE-based cellular network according to embodiments;
- **Fig. 5**: shows an overview of the main EMM states in a UE and transitions between those states according to embodiments;
- **Fig. 6**: shows an overview of the main EMM states in a Mobility Management Entity (MME) and transitions between those states according to embodiments;
- **Fig. 7**: shows example components of an electronic device according to embodiments;
- **Fig. 8**: shows an overview of the main EMM states in a UE and transitions between those states according to embodiments;
- **Fig. 9**: shows an overview of the main EMM states in a Mobility Management Entity (MME) and transitions between those states according to embodiments;
- **Fig. 10**: shows an exemplary flow chart of steps performed by an UE in an Attach procedure according to embodiments;
- **Fig. 11**: shows an exemplary flow chart of steps performed by an UE in a TAU procedure according to embodiments;
- **Fig. 12**: shows an exemplary flow chart of steps performed by an MME in an Attach procedure according to embodiments; and
- **Fig. 13**: shows an exemplary flow chart of steps performed by an MME in a TAU procedure according to embodiments.

### DETAILED DESCRIPTION

The state model in 3GPP TS 24.301, version 13.4.0, assumes that a user equipment (UE) in EPS (Evolved Packet System) Mobility Management (EMM) state EMM-REGISTERED always has a Packet Data Network (PDN) connection. When having a PDN connection, the UE has at least one default EPS bearer established (having a corresponding EPS bearer context). This property is also taken into account by the EMM protocol explicitly or implicitly in a number of places. For example, when the UE or the MME need to deactivate the last default EPS bearer context, they have to use the EMM detach procedure instead of a PDN disconnect procedure.

In the advent of Cellular Internet of Things (CIoT) optimizations, it may be desirable to allow the UE and the MME to perform an Attach procedure without activating a PDN connection, if both UE and MME support the feature. In the Evolved Packet Core (EPC), i.e. the core network of the 3GPP LTE-based systems, this may be desirable, as this would enable the core network to save resources for establishing and maintaining established PDN connections for UEs that do very sporadically or never use a PDN connection (e.g. consider the example of MTC devices, e.g. metering devices, that send a measurement once a month or once a year via Short Message Service (SMS)). But also at the UE side the complexity of the UE may be reduced. For example, if only small amounts of data are communicated by the UE (e.g. an MTC device), this may allow for foreseeing a simplified transmitter and/or receiver chain with smaller data buffers and/or lower processing complexity, which may reduce costs and may also improve battery utilization. Support of UE attachment without PDN connection requires enhancements to the relevant stage 3 specification of the 3GPP (e.g. TS 24.301, version 13.4.0), because in legacy networks there is currently a linkage between the EMM protocol and the ESM protocol. E.g. during an Attach procedure (i.e. an EMM procedure) the UE is currently required to always request for a PDN connection (i.e. to perform an ESM procedure) - see section 5.5.1 of TS 24.301, version 13.4.0. Furthermore, the state model for EMM assumes that as long as the UE is in state EMM-REGISTERED at least one default EPS bearer is active. As a further consequence, in various situations the non-access stratum (NAS) protocol requires a special handling, if the last default EPS bearer is to be deactivated.

Thus, working group 1 of the TSG Core Network & Terminals (CT) may have to decide whether:
- to modify the legacy EMM state EMM-REGISTERED;
- introduce a new EMM state; or
- introduce a whole new state model
to allow for an attachment of UEs without the establishment of a PDN connection.

At least some of the embodiments of this disclosure may relate to stage-3 modifications, and updates to the EMM state model as defined in 3GPP TS 24.301, version 13.4.0, and other relevant procedures to provide an Attach procedure without a bearer or PDN connection for 3GPP LTE-based devices. Furthermore, embodiments may relate to new or updates to existing message formats that may be used to implement the updated procedures to provide an Attach procedure without a bearer or PDN connection. Notably, the improvements discussed herein for enabling support of attachment without PDN connectivity may for example be applicable to 3GPP LTE Release 13 and later releases, but the improvements may also be implemented in earlier releases of 3GPP LTE.

In embodiments, during an Attach procedure and/or tracking area update (TAU) procedure the UE and the MME may negotiate on non-access stratum (NAS) level (e.g. using new IEs in various messages of the attach procedure and/or TAU procedure, e.g. a new Preferred network behaviour IE and/or a new Supported network behaviour IE) whether attach without PDN connectivity is supported or not. In various situations, when the last default EPS bearer context is to be deactivated, the UE and the MME behaviour may depend on the result of this negotiation.

If both the UE and the MME support attach without PDN connectivity, the UE may send an Attach Request message including an ESM Dummy Message instead of a PDN Connectivity Request message. In the current Attach procedure, the Attach Request contains the PDN Connectivity Request message in the ESM message container IE. The ESM Dummy Message is introduced, because in legacy networks the ESM message container is a mandatory IE in the Attach Request/Accept/Complete message of the Attach procedure, and the ESM message container needs to be filled with a message of at least 3 octets length in order to fulfil the requirements for the minimum length of the ESM message container IE. The same ESM Dummy Message can also be included in the Attach Accept and Attach Complete message, if no other ESM messages are to be transferred.

Accordingly, embodiments provide a (new or updated) Attach Request message for transmission by a UE within a 3GPP LTE-based mobile communication system, the Attach Request message comprising an IE for indicating whether EMM state EMM-REGISTERED without PDN connection is supported by the UE, and an IE comprising an ESM Dummy Message to indicate to the MME that the UE wants to attach to the network without establishment of PDN connectivity. According to the invention, the ESM Dummy Message consists of the following fields: a field for indicating a protocol discriminator; a field for indicating an EPS bearer identity; a field for indicating a procedure transaction identity; and a field for indicating an ESM Dummy Message identity.

The IE comprising the EPS ESM Dummy Message may be for example the ESM message container IE. Furthermore, the IE for indicating whether the EPS EMM state EMM-REGISTERED without PDN connection is supported by the UE is a UE network capability IE of the Attach Request message.

Other embodiments provide an Attach Accept message for transmission by a MME within a 3GPP LTE-based mobile communication system, the Attach Accept message comprising an IE for indicating whether EMM state EMM-REGISTERED without PDN connection is supported by the MME, and an IE comprising an ESM Dummy Message to indicate to the UE that the MME accepts the request of the UE to attach to the network without establishment of PDN connectivity. The ESM Dummy Message may for example comprise a field for indicating a protocol discriminator; a field for indicating an EPS bearer identity; a field for indicating a procedure transaction identity; and a field for indicating an ESM Dummy Message identity.

Further embodiments relate to an Attach Complete message for transmission by a UE within a 3GPP LTE-based mobile communication system, the Attach Complete message comprising an IE comprising an ESM Dummy Message. The ESM Dummy Message may for example comprise a field for indicating a protocol discriminator; a field for indicating an EPS bearer identity; a field for indicating a procedure transaction identity; and a field for indicating an ESM Dummy Message identity. Furthermore, on other embodiments, the ESM Dummy Message may be introduced for the purpose of triggering an ESM error handling (e.g. using an Attach Reject message together with an ESM Status message with ESM cause #97 "message type non-existent or not implemented"), if the MME does not support attach without PDN connectivity. In addition, the Attach Reject message may be sent with an EMM cause #19 "ESM failure" and an IE comprising an ESM Status message with ESM cause #97. This is because the ESM cause included in the ESM Status message is considered to be more informative than an EMM cause #96 "Invalid mandatory information" which the MME would probably send with the Attach Reject message, if the ESM message container IE were empty or would be missing from the Attach Request message.

There may also be impacts to the legacy EMM state machine as well. Embodiments may include one or more of the following for updating the EMM state machine in UE and MME.In those embodiments, the legacy EMM-REGISTERED state is updated so that in the new EMM-REGISTERED state the UE has an EMM context in the MME, and where it has 0, 1 or more PDN connections established. Furthermore, the state transition from EMM-DEREGISTERED to EMM-REGISTERED may only comprise a successfully Attach procedure, but no longer an EPS bearer context activation. The change of the definition of the EMM-REGISTERED state may imply also that the deactivation of the last EPS bearer (usually, a default EPS bearer) may no longer automatically result in an EMM state change from EMM-REGISTERED to EMM-DEREGISTERED. If UE and MME support the EMM-REGISTERED state without requiring a PDN connection, the UE and MME may maintain the UE in EMM-REGISTERED state even when there is no PDN connection established or the last EPS bearer is torn down.

As already outlined above, updates to Attach/TAU messages for CloT optimizations may be feasible. As outlined above, new Attach Request, Attach Accept and Attach Complete message formats may be defined. However, also messages of the TAU procedure may be updated. For example, some embodiments provide a TAU request message for transmission by a UE within a 3GPP LTE based mobile communication system. The TAU message comprises an IE for indicating whether EMM state EMM-REGISTERED without PDN connection is supported by the UE. Similarly, other embodiments relate to a TAU accept message for transmission by a MME within a 3GPP LTE based mobile communication system. The TAU accept message comprises an IE for indicating whether EMM state EMM-REGISTERED without PDN connection is supported by the MME. The exchange of the two TAU messages between the UE and MME may for example inform the UE and MME, respectively, whether the other node supports EMM state EMM-REGISTERED without PDN connection. Furthermore, it should be noted that an attach without activating a PDN connection does not prevent the UE from activating such a PDN connection later or deactivating such a PDN connection, even if it is the last existing PDN connection that is to be deactivated. For this, the UE and MME may "memorize" whether initial attach was performed without activation of a PDN connection. Furthermore, this information i.e. whether or not the initial attach was performed without activating a PDN connection may also be made available to a new MME, e.g. if the UE performs an inter-MME TAU. If the UE performed attach without PDN connection and then establishes a PDN connection before the inter MME TAU, the new MME cannot deduce from the presence of the PDN connection whether the UE performed attach with activation of a PDN connection. Accordingly, this information would need to be explicitly signaled to the new MME.

In principle, the information whether or not the initial attach was performed without activating a PDN connection could be transferred from old MME to new MME, or between UE and new MME. In some embodiments, the information whether or not the initial attach was performed without activating a PDN connection is directly signaled between UE and MME. For example, the above described updated TAU messages may be used for this purpose. The direct signaling of the information between the UE and MME may be advantageous because one does not need to consider situations where the old or the new MME does not understand the information, or where an Serving GPRS Support Node (SGSN) might get involved at some point (e.g. when supporting an inter-Radio Access Technology (RAT) change or regarding operation in a network providing inhomogeneous support of the feature).

More generally, if the information whether or not an initial attach without activating a PDN connection is supported is also signaled during the Attach procedure (as the UE is doing during the TAU procedure), it would be possible for the UE and the MME to agree during the Attach procedure that the UE can remain attached without any PDN connection established, even if the UE initially performs an attach with activation of a PDN connection. Hence, the UE and the MME could negotiate support of this new state "EMM-REGISTERED without PDN connection" during the Attach procedure and TAU procedure. Specifically, the UE could indicate support of the new feature in the Attach Request message in a new information element (IE) that is also carrying the other CloT-related parameters (like support of CloT control plane/user plane optimizations). The MME could indicate its support of the new feature in Attach Accept (preferably also in a new information element carrying the CloT-related parameters so that all the CloT-related signaling information can be found in one place; otherwise, the EPS network feature support IE may also be a possible candidate).

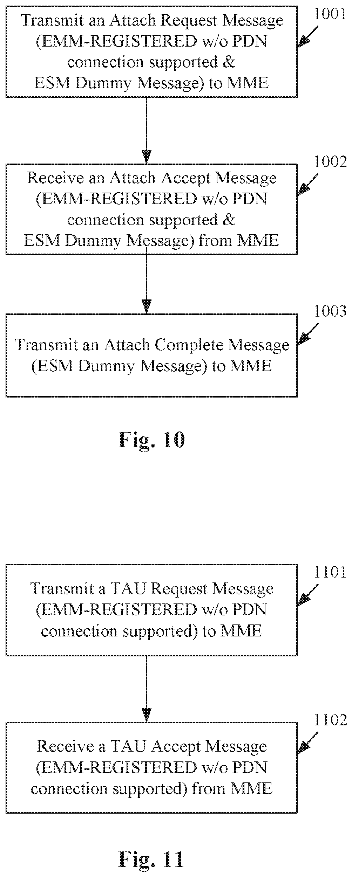

In line with the discussion herein above, further embodiments relate to a UE. An exemplary operation of an UE to perform an Attach procedure is shown in Fig. 10. The UE comprises means or circuitry for transmitting 1001 an Attach Request message for a MME. In addition to or instead of the means for transmitting, the UE may comprise means for generating and/or means for encoding an Attach Request message. The Attach Request message may comprise an indication to the MME that the UE supports an EMM state EMM-REGISTERED without PDN connection, and an ESM Dummy Message that indicates to the MME that the UE requests attach to the network without establishment of a PDN connection. The UE further comprises means or circuitry for receiving 1002 an Attach Accept message transmitted from the MME. In addition to or instead of the means or circuitry for receiving, the UE may comprise means for processing and/or means for decoding the Attach Accept message. The Attach Accept message may comprise an indication to the UE that the MME supports the EMM state EMM-REGISTERED without PDN connection, and an ESM Dummy Message.

In another embodiment, the UE comprises means or circuitry for generating and/or means or circuity for transmitting 1003 an Attach Complete message to the MME, wherein the Attach Complete message comprises an ESM Dummy Message.

In a further embodiment, the UE also comprises means or circuitry for receiving an Attach Reject message comprising an ESM message container IE with an ESM status message. In addition to or instead of the means or circuitry for receiving, the UE may comprise means for processing and/or decoding an Attach Reject message comprising an ESM message container IE with an ESM status message. The ESM status message could for example indicate a cause #97 "message type non-existent or not implemented". The Attach Reject message may for example comprise an EMM cause IE for an EMM cause value which has been set by the MME to #19 "ESM failure".

In another embodiment, the Attach Reject message comprises an EMM cause IE for an EMM cause value which has been set by the MME to #15 "No suitable cells in tracking area", to indicate to the UE that the PDN connectivity reject is due to ESM cause #29 subject to operator policies.

The Attach Request message may be for example encapsulated/transmitted in a RRC connection setup complete message. For example, the Attach Accept message may be encapsulated/transmitted in a RRC downlink information transfer message.

In yet another embodiment, the ESM Dummy Message is comprised within an ESM message container IE. The ESM message container IE may be comprised in the Attach Request message and/or Attach Accept message, respectively. In one example, the ESM Dummy Message comprises: a field for indicating a protocol discriminator; a field for indicating an EPS bearer identity; a field for indicating a procedure transaction identity; and a field for indicating an ESM Dummy Message identity.

In another embodiment, the UE comprises means or circuitry (for example, a memory) for storing information on the MME supporting the EMM state EMM-REGISTERED without PDN connection.

Other embodiments relate to a UE that is performing a TAU procedure as exemplarily shown in the flow chart of Fig. 11. The UE comprises means or circuitry for transmitting 1101 a TAU request message to a MME. In addition to or instead of the means or circuitry for transmitting, the UE may comprise means or circuitry for generating and/or means for encoding a TAU request message. The TAU request message may for example comprise an indication to the MME that the UE supports an EMM state EMM-REGISTERED without PDN connection. The UE further comprises means or circuitry for receiving 1102 a TAU accept message transmitted from the MME. The TAU accept message may comprise an indication to the UE that the MME supports the EMM state EMM-REGISTERED without PDN connection.

In a further embodiment, the TAU request message may further comprise an EPS bearer status IE in which a default EPS bearer context is marked inactive. The default EPS bearer context is associated with the last remaining PDN connection of the UE.

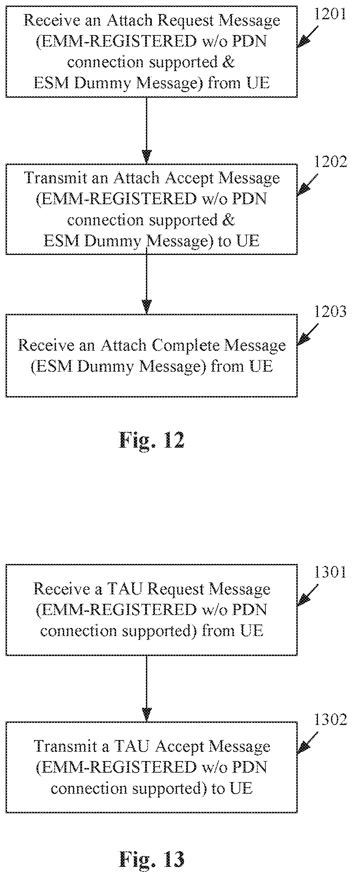

Further embodiments relate to a MME. An exemplary flow chart of an Attach procedure according to an example embodiment is shown in Fig. 12. The MME comprises means or circuitry for receiving 1201 an Attach Request message transmitted by a UE. In addition to or instead of the means or circuitry for receiving, the MME may comprise means or circuitry for decoding and/or means for processing an Attach Request message. The Attach Request message may comprise an indication to the MME that the UE supports an EMM state EMM-REGISTERED without PDN connection. The Attach Request message may also comprise an ESM Dummy Message that indicates to the MME that the UE requests attach to the network without establishment of a PDN connection. The MME further comprises means or circuitry for transmitting 1202 an Attach Accept message to the UE. In addition to or instead of the means or circuitry for transmitting, the UE may comprise means or circuitry for generating and/or means for encoding an Attach Accept message. The Attach Accept message may comprise an indication to the UE that the MME supports the EMM state EMM-REGISTERED without PDN connection, and an ESM Dummy Message that indicates to the UE that the MME has not established a PDN connection for the UE.

In further embodiments, the MME may skip a default radio bearer setup procedure in response to said Attach Request message. In embodiments, the Attach Request message may be encapsulated/transmitted in a S1 Application Protocol (S1AP) Initial UE message. For example, the Attach Accept message may be encapsulated/transmitted in a S1AP Downlink NAS transport message.

As in previous exemplary embodiments, the ESM Dummy Message may be comprised within an ESM message container IE comprised in the Attach Request message and/or Attach Accept message, respectively. In embodiments of the invention, the ESM Dummy Message comprises a field for indicating a protocol discriminator; a field for indicating an EPS bearer identity; a field for indicating a procedure transaction identity; and a field for indicating an ESM Dummy Message identity.

In other embodiments, the MME also comprises means or circuitry (e.g. a memory) for storing information on the UE supporting the EMM state EMM-REGISTERED without PDN connection in a context of the UE.

In further embodiments, the means or circuitry for receiving of the MME receives 1203 an Attach Complete message transmitted by a UE. In addition to or instead of the means or circuitry for receiving, the means or circuitry for decoding and/or means for processing may decode/process the Attach Complete message. The Attach Complete message may comprise an ESM Dummy Message.

Further embodiments relate to an comprising means or circuitry for receiving 1201 an Attach Request message configured according to one of the embodiments disclosed herein. In addition to or instead of the means or circuitry for receiving, the MME may comprise means or circuitry for decoding and/or means for processing an Attach Request message. The MME also comprises means or circuitry for transmitting an Attach Reject message to the UE. In addition to or instead of the means or circuitry for transmitting, the MME may comprise means or circuitry for encoding and/or means for generating an Attach Reject message. The Attach Reject message may for example indicate that the MME does not support an ESM Dummy Message in the Attach Request message.

In some embodiments, the Attach Reject message may comprise an ESM message container IE with an ESM status message that indicates a cause #97 "message type non-existent or not implemented".

Further embodiments relate to an MME to perform a TAU procedure as exemplary shown in Fig. 13. The MME comprises means or circuitry for receiving 1301 a TAU request message transmitted by a UE. In addition to or instead of the means or circuitry for receiving, the MME may comprise means or circuitry for decoding and/or means for processing a TAU request message. The TAU request message may comprise an indication to the MME that the UE supports an EMM state EMM-REGISTERED without PDN connection. The MME also comprising means or circuitry (e.g. processing circuitry) for updating the tracking area of the UE, and means or circuitry for transmitting 1302, in response to a successful tracking area update, a TAU accept message to the UE. The TAU accept message may comprise an indication to the UE that the MME supports the EMM state EMM-REGISTERED without PDN connection.

In some embodiments, the TAU request message further comprises an EPS bearer status IE in which a default EPS bearer context is marked inactive, and the MME further comprises means or circuitry adapted to, if the default EPS bearer context is associated with the last remaining PDN connection of the UE in the MME, and the UE and MME support the EMM state EMM-REGISTERED without PDN connection, locally deactivate all EPS bearer contexts associated to the PDN connection with the default EPS bearer context without peer-to-peer ESM signaling to the UE.

For an evolved Node B (eNB) to select an MME that supports Attach without PDN connectivity request, embodiments may add a new indicator inside a Radio Resource Control (RRC) Connection Setup Complete message. When UE sends RRC Connection Setup Complete message containing Attach Request this indicator is added to the RRC Connection Setup Complete message header. This indicator indicates that UE supports Attach without PDN connectivity request and eNB should select an MME that also support Attach without PDN connectivity request. In absence of such indicator reject cases may increase.

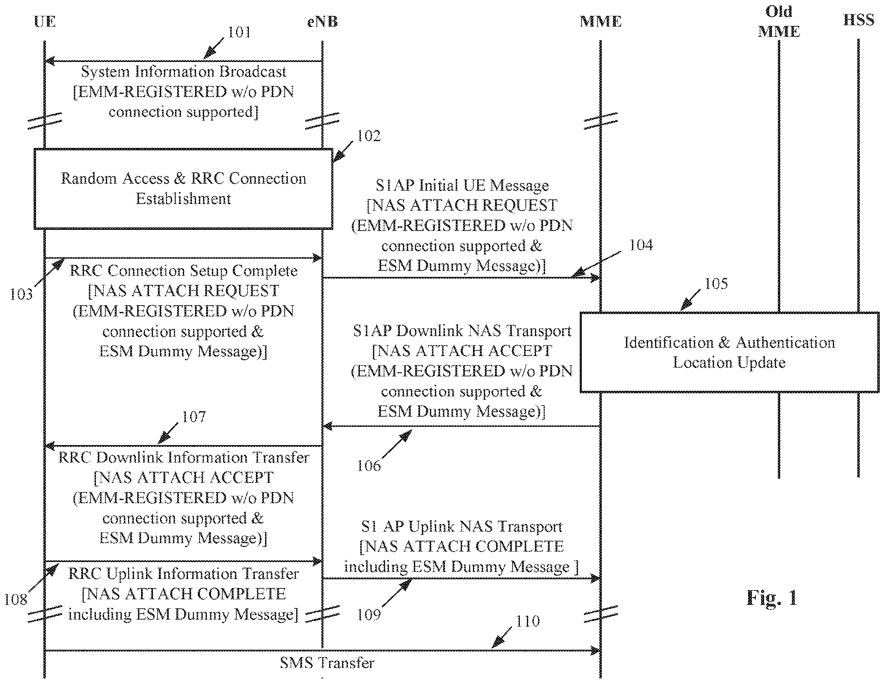

Fig. 1 shows an example message flow and operations performed by various entities of a 3GPP LTE-based cellular system according to an exemplary embodiment. In general and without intending to limit the disclosure in this respect, it can be assumed that the UEs first synchronize to a cell provided by an eNB. Subsequently, the UEs may read the system information (including e.g. a Master Information Block (MIB) and several System Information Blocks (SIBs)). The eNB may broadcast system information in its cell to configure the UEs with basic parameters related to communication within the cell, including for example the parameters required for random access. Some part of the system information may also include an indication that the cellular network (or more accurately the NAS entities (e.g. MME) in the EPC) support an EMM-REGISTERED state without PDN connection. In other words, the system information may indicate to the UEs in the cell that the MME's implementation of the EMM state machine supports an EMM-REGISTERED state where the UE has an EMM context in the MME, and where the UE is allowed to have 0, 1 or more PDN connections established. The system information may be broadcast 101 by the eNB within its coverage area. The indication of support of an EMM-REGISTERED state without PDN connection could be encapsulated/transmitted for example in a modified existing SIB or a newly defined SIB.

At some time later, a UE may decide to attach to the cellular network through the cell of the eNB without establishment of a PDN connection. The UE may start 102 a random access procedure and RRC Connection Establishment procedure with the eNB. Notably, in this embodiment, the RRC Connection Setup Complete message that is sent from the UE to the eNB includes a NAS Attach Request message as discussed already herein above. The Attach Request message comprised as an NAS message in the RRC Connection Setup Complete may include an indication that the UE supports an EMM-REGISTERED state without PDN connection. The indication may be given in an IE of the Attach Request message, e.g. a UE network capability IE. The Attach Request message may further include an IE including an ESM Dummy Message. Accordingly, the Attach Request message does not contain a PDN connectivity request. The UE may send the RRC Connection Setup Complete message after receiving a RRC Connection Setup message from the eNB as part of the RRC Connection Establishment procedure to complete the three-way handshake procedure.

As noted the ESM Dummy Message may be included in an ESM message container IE, if the UE does not request for PDN connectivity. The ESM message may be sent without integrity protection. The ESM Dummy Message may include, in one example realization, a protocol discriminator (PD) field, a EPS bearer identity field, a procedure transaction identity (PTI) field and a message type field (or ESM Dummy Message identity). The protocol discriminator field may identify the message as an ESM protocol message. In one example the field may be 4 bits long and the bits may be set to 0010. The EPS bearer identity field may be used to identify a message flow (between the UE and the MME). The PTI field may be used to discriminate different bi-directional messages flows for a given PD. The PTI field may be 8 bits long. The PTI field may indicate one of up to 254 message flows (e.g. when the bit combination 00000000 indicates no PTI being assigned and the bit combination 11111111 is reserved). The message type field indicates the message type within the protocol identified by the PD field. In this case, message type field indicates an ESM Dummy Message identity. Of course these field names are exemplary only and other field names may be used.

Upon receipt of the Attach Request message, the eNB forwards 104 the Attach Request message to the MME. The eNB may use the S1AP protocol for this and may forward the Attach Request message as part of an S1AP protocol message to the MME. The Attach Request message may be for example transmitted from the eNB to the MME as part of an S1AP Initial UE Message. Upon receipt of the Attach Request message at the MME, the MME may (successfully) parse the Attach Request message, and recognize that the UE supports an EMM-REGISTERED state without PDN connection. This information may be stored by the MME within the EMM context of the UE for later use. If the MME does not support an EMM-REGISTERED state without PDN connection (e.g. if the MME is a legacy MME), this parsing of the Attach Request message may not result in the EMM protocol sublayer in the MME considering the Attach Request to be in error (as the ESM message container IE is included in the Attach Request with a valid information element length). Yet when parsing the contents of the ESM message container IE, the ESM protocol sublayer in the legacy MME would find that an ESM message of unknown message type is included and the expected PDN connectivity request is missing in the Attach Request message. Consequently the legacy MME would not be able to establish a PDN connection for the UE and consider the attach procedure as failed. Accordingly, a legacy MME would likely send an Attach Reject including an ESM Status message with ESM cause #97 "message type non-existent or not implemented" to the UE, which would allow the UE to recognize that the MME does not support an EMM-REGISTERED state without PDN connection.

Returning to Fig. 1, upon receipt of the Attach Request message from the UE, the MME may perform 105 procedures such as identification and authentication and will also update the tracking area (TA) of the UE (location update) e.g. based on the tracking area identifier (TAI) that may be included in the Attach Request message. More important for the purpose of this disclosure, if the MME accepts the requested attach from the UE, the MME may skip procedures related to ESM, e.g. a PDN connection establishment procedure for establishing a default EPS bearer (e.g. Default Radio Bearer Setup procedure), as no PDN connection is requested by the UE. As the attachment is accepted, the EMM context may be created in the MME as noted above to store the information on the UE supporting state EMM-REGISTERED without PDN connection. Accordingly, the MME returns an Attach Accept message to the UE (via the eNB) without establishing an EPS bearer.

As shown in Fig. 1, the MME may send 106 the Attach Accept message as part of a S1AP Downlink NAS Transport message to the eNB. The eNB may then forward 107 the Attach Accept message as part of an RRC message, e.g. an RRC Downlink Information Transfer message. Similar to the Attach Request message, the Attach Accept message may indicate (or confirm) that the MME (also) supports an EMM-REGISTERED state without PDN connection (e.g. by including this indication in an IE of the Attach Accept message, e.g. an EPS network feature support IE) and may include an ESM Dummy Message. The ESM Dummy Message may have the same format as discussed above in connection with the Attach Request message.

Upon receipt of the Attach Accept message from the MME at the UE, the UE recognizes that the attachment was accepted and also that the MME supports the EMM-REGISTERED state without PDN connection. This information may be stored by the UE, e.g. in an EMM context for later use. Accordingly, the UE may also be aware of no default EPS bearer having been established. The UE may enter state EMM-REGISTERED (without PDN connection). Further, the UE may also set the EPS update status to EU1 UPDATED.

To conclude the Attach procedure with the MME, the UE transmits an Attach Complete message to the MME. The UE may transmit 108 the Attach Complete message using the RRC protocol, e.g. an RRC Uplink Information Transfer message, to the eNB. The Attach Complete message may also comprise an ESM Dummy Message in its ESM message container. The ESM Dummy Message may have the same format as discussed above in connection with the Attach Request message.

The UE could be, for example only, a MTC device. The MTC device may infrequently transmit or receive a small amount of a data. When triggered for example by some event, the UE may - even though no PDN connection is activated in the core network - transmit 110 some data via a Short Message Service (SMS) without requiring establishment or activation of a PDN connection (notably, SMS messages may be sent via the control plane, and thus do not require a PDN connection). This option may be relevant especially if the amount of data to be sent is less or equal to 140 octets so that it can be transferred with a single short message (SMS message).

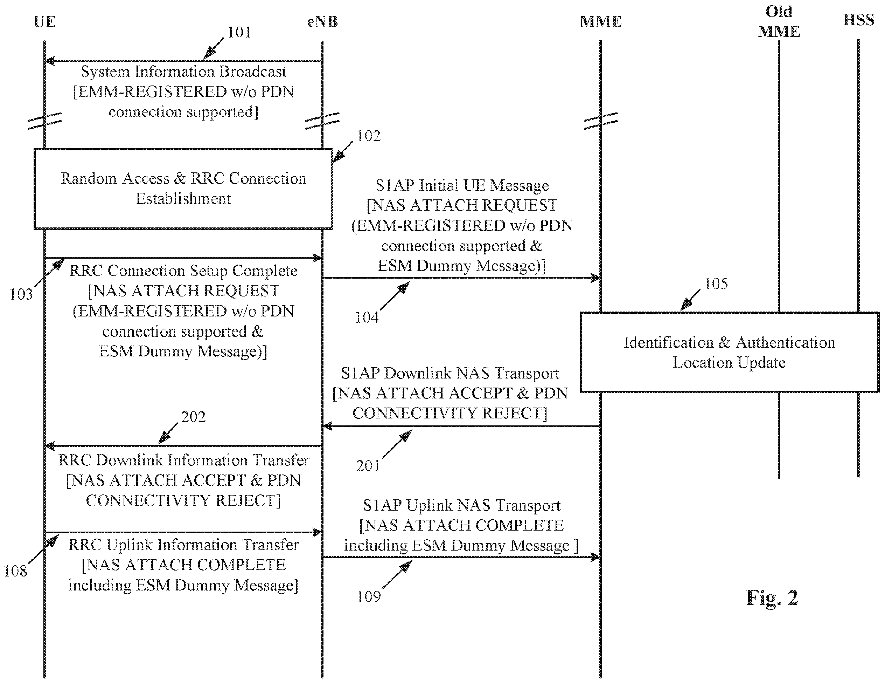

Fig. 2 shows another alternative example message flow and operations performed by various entities of a 3GPP LTE-based cellular system according to an exemplary embodiment. Steps 101 to 105 are similar to those discussed in connection with Fig. 1 above. In this alternative implementation, the MME may return 201 an Attach Accept message to the UE, but the Attach Accept message includes a PDN Connectivity Reject. Hence, in this example, the result of the ESM procedure indicates a "failure", while the EMM procedure is successful. For example, the Attach Accept message may include an ESM message container IE including an EPS session management message indicating the PDN connectivity reject and an ESM cause. The ESM cause may be cause #97 "message type non-existent or not implemented". The PDN Connectivity Reject may indicate to the UE that no PDN connection has been established (according to the UE's request) and the Attach Accept message indicating acceptance of the attach request would cause the UE to proceed with sending an Attach Complete message as in the example of Fig. 1. This example implementation may require fewer changes to the Attach Accept message sent by the MME as it could rely on already existing message types in the 3GPP TS 24.301, version 13.4.0. Yet it should be noted that under 3GPP TS 24.301, version 13.4.0, the MME would conventionally transmit a PDN Connectivity Reject in an Attach Reject message, and not in an Attach Accept message.

In yet another exemplary implementation, the MME may also include in the Attach Accept message an ESM Status message instead of the PDN Connectivity Reject. Also in the ESM Status message the ESM cause may be cause #97 "message type non-existent or not implemented".

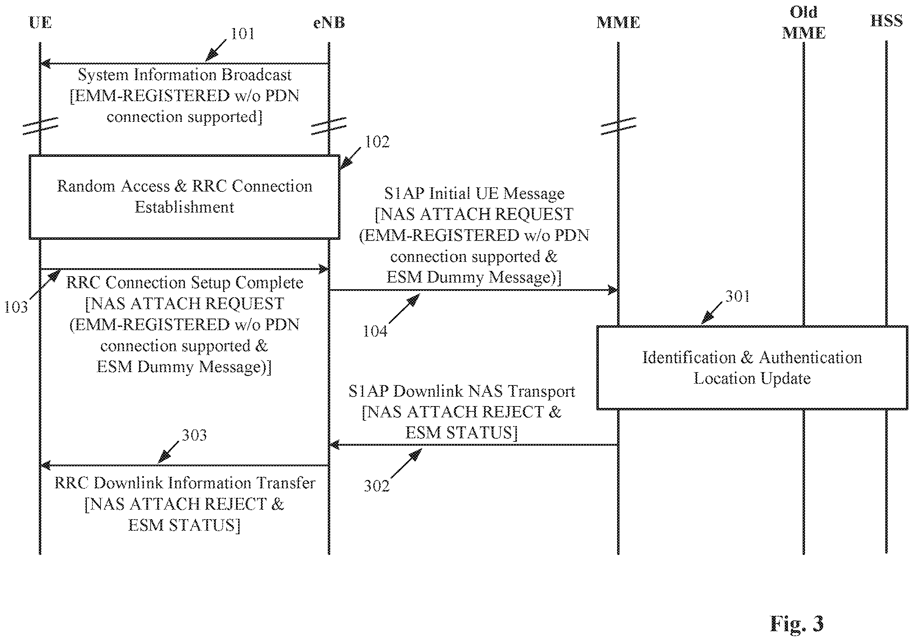

Fig. 3 shows another alternative example message flow and operations performed by various entities of a 3GPP LTE-based cellular system according to an exemplary embodiment. Steps 101 to 104 are similar to those discussed in connection with Fig. 1 above. However, it is assumed in step 301 that the MME does not accept the request for attachment by the UE.

For example, in one example situation, the MME may not support the EMM-REGISTERED state without PDN connection, i.e. may be a conventional MME not supporting the improvements discussed herein. In this case, the MME would expect the Attach Request message from the UE to comprise a PDN connectivity request within the ESM message container IE of the Attach Request message. Accordingly, although message parsing may be successful, the lacking PDN connectivity request may cause an error in the handling of the Attach Request message by the MME, so that the MME may decide to reject the attachment. Therefore, the MME would transmit 302 an Attach Reject message to the UE. Similar to the Attach Accept message discussed before, the Attach Reject message may encapsulated in an S1AP Downlink NAS Transport message for transmission 302 from the MME to the eNB. The eNB may encapsulate the Attach Reject message in an RRC Downlink Information Transfer message for forwarding 303 to the UE. In the assumed example situation, the Attach Reject message may comprise an ESM message container IE with an ESM status message that indicates a cause #97 "message type non-existent or not implemented". This may indicate to the UE that the MME does not support EMM-REGISTERED state without PDN connection. Notably, this error cause may be more informative than an EMM cause #96 "Invalid mandatory information" which the MME would probably send if the ESM message container IE were empty or were not included in the message. Furthermore, the Attach Reject message may for example comprise an EMM cause IE for an EMM cause value which has been set by the MME to #19 "ESM failure".

In another embodiment, the Attach Reject message may include an EMM cause IE for an EMM cause value which has been set by the MME to #15 "No suitable cells in tracking area", to indicate to the UE that the PDN connectivity reject is due to ESM cause #29 subject to operator policies. For instance, this cause may be used in a situation where the MME would support EMM-REGISTERED state without PDN connection, but the attach fails for another reason.

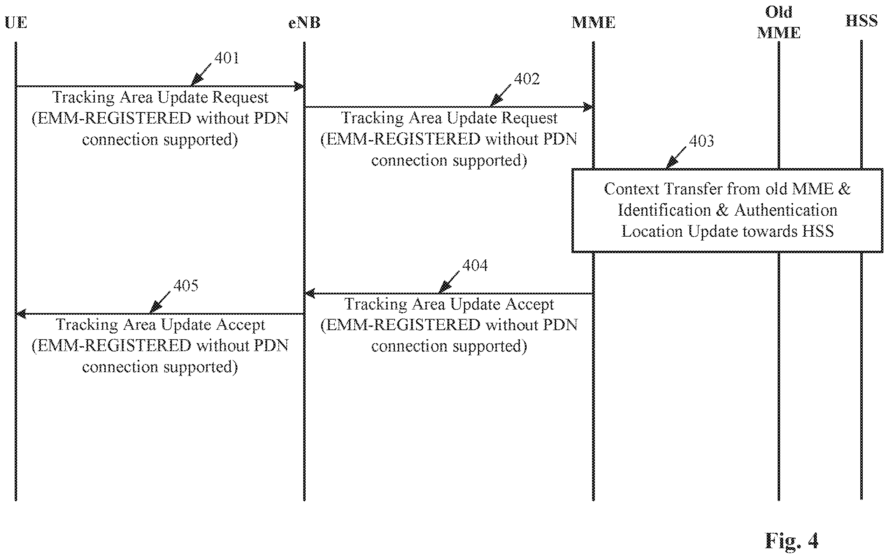

Fig. 4 shows an alternative example message flow and operations performed by various entities of a 3GPP LTE-based cellular system according to an exemplary embodiment when performing a TAU. If the UE detects it has entered a new TA (Tracking Area) that is not in the list of TAIs (Tracking Area Identities) that the UE registered with the network, the UE may inform the MME of the new tracking area. This may also apply to UEs that are in EMM-REGISTERED state and do not maintain any PDN connection. A similar message flow is also applicable if the periodic TA update timer has expired, or in response to another trigger event, e.g. if the UE changes the UE network capability information.

Accordingly, the UE transmits 401 a TAU Request to the MME. The TAU request may comprise an indication of the new TA to be registered at the MME, and further an indication (for example in an IE, e.g. an UE network capability information element) that the UE supports EMM-REGISTERED without PDN connection. As noted this indication may be of particular relevance if the TAU Request of the UE is routed to a new MME for processing. Similar to the previous examples, the TAU Request message is transmitted to the eNB via the RAN. The TAU Request may be comprised within an RRC message and may comprise RRC parameters indicating the Selected Network. The TAU Request message may also include an EPS bearer context status IE for indicating the status of the EPS bearers of the UE to the (new) MME. If the UE has no EPS bearers established, all EPS bearer contexts may be marked inactive in this IE.

The eNB forwards 402 the TAU Request to an MME. The eNB may encapsulate the TAU Request message in an S1AP message for this purpose. Notably, the eNB may route the TAU Request message to an MME associated with the eNB. The MME will notice the indication that the UE supports EMM-REGISTERED without PDN connection, and if the MME is a new MME (as outlined below), the MME may store this information in an EMM context for the UE for later use (for example, this information may be relevant when deciding on how to handle a request for deactivating the last EPS bearer). Further, the MME performs 403 procedures for updating the TA of the UE according to the information provided by the eNB together with the TAU Request message. These procedures may include Context Transfer from an old MME (optional), Identification & Authentication, and updating the TA location towards the Home Subscriber Server (HSS) of the UE. Identification & Authentication may include e.g. authentication and security functions that are performed/initiated by the MME. The MME may also determine if a Serving Gateway (GW) change is required due to the location update of the UE. If so, the new MME determines to relocate the Serving GW. This may involve also the update of established bearers in the EPC to ensure proper routing of packets to and from the UE. This may include the release of network resources for inactive EPS Bearers, and also the establishment of new EPS bearers (if any).

The MME that will process the TAU Request message may be a new MME. As the eNB receiving the TAU Request from the UE may be associated - from the network organization point of view - to another MME than the eNB of the cell where the UE performed the last registration prior to the TAU, the TAU Request message may thus be routed to a new MME instead of the MME where the UE registered previously. As regards the indication (e.g. in form of an IE) that the UE supports EMM-REGISTERED without PDN connection contained in the TAU Request, if the MME is a new MME (i.e. an MME to which the UE has not been registered before) the new MME will store this information in the EMM context of the UE established as part of the TAU procedure. Thus the new MME knows that the UE would support non PDN connection for EMM-REGISTERED stated, which might otherwise be unknown to the new MME if the TAU Request is sent by the UE while having one or more EPS bearers established. Alternatively, the Context Transfer from an old MME may include the indication (e.g. in form of an IE) that the UE supports EMM-REGISTERED without PDN connection.

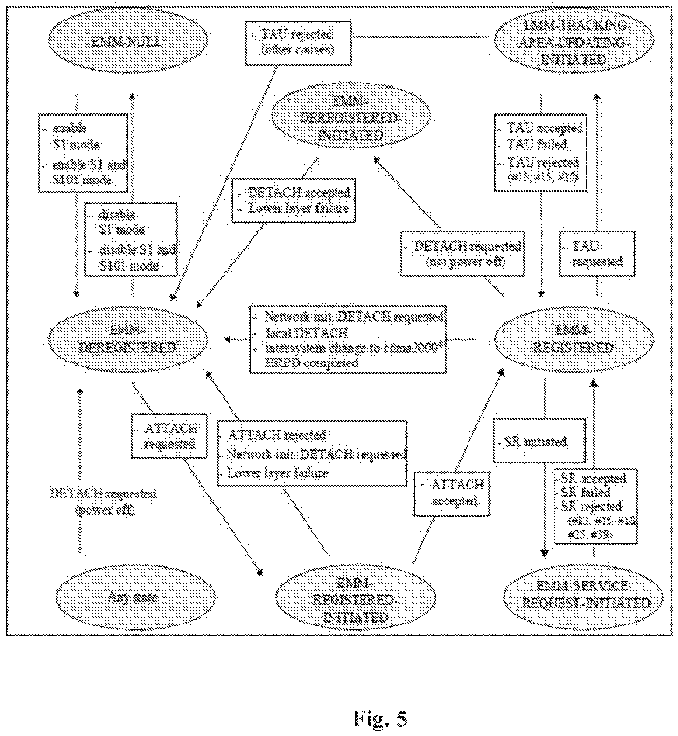

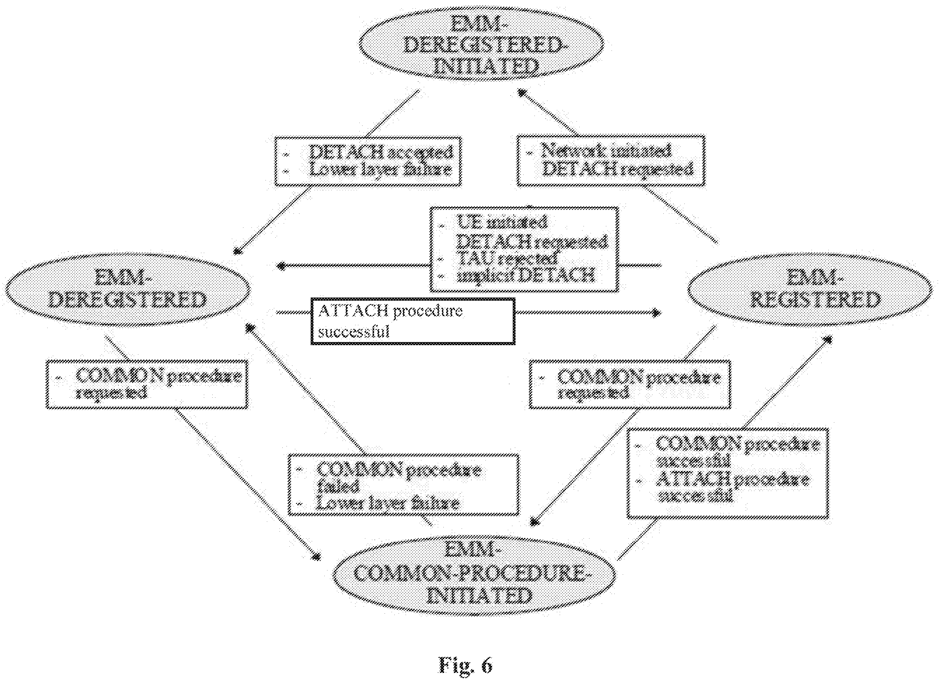

If the TAU is successful, the MME will return a TAU Accept message to the UE. The TAU Accept message may also comprise an indication (for example in an IE, e.g. EPS network feature support IE) that the (new) MME supports EMM-REGISTERED without PDN connection. Upon receipt, this information may also be updated/stored in an EMM context of the UE. The MME sends 404 the TAU Accept message to the eNB via an S1AP message and the eNB will forward 405 the TAU Accept message to the UE via the RAN. The eNB may use an RRC message to transfer the TAU Accept message (NAS message) to the UE. Fig. 5 shows overview of the main EMM states in a UE and transitions between those states according to embodiments of the invention. Further, Fig. 6 shows overview of the main EMM states in a Mobility Management Entity (MME) and transitions between those states according to embodiments of the invention. In these overviews, the EMM-REGISTERED state is updated so that in the new EMM-REGISTERED state the UE has an EMM context in the MME, and the UE may have 0, 1 or more PDN connections established.

As for the UE state transitions shown in Fig. 5, the definition of the state transitions are substantially corresponding to those described in 3GPP TS 24.301, version 13.4.0 (see section 5.1.3.2) except for the noted difference that the EMM-REGISTERED state may no longer require any PDN connection (or EPS bearer). Accordingly, also an implied state transition from EMM-REGISTERED to EMM-DEREGISTERED may not necessarily occur in reply to deactivation of the last (default) EPS bearer.

As for the MME state transitions shown in Fig. 6, the definition of the state transitions are substantially corresponding to those described in 3GPP TS 24.301, version 13.4.0 (see 5.1.3.4). Yet, in contrast to the legacy state transition diagram, the state transition from EMM-DEREGISTERED to EMM-REGISTERED may no longer require context activation of the default EPS bearer, but only successful attach as shown in Fig. 6. Furthermore, the EMM-REGISTERED state may no longer require any PDN connection (or EPS bearer). Accordingly, at the MME side an implied state transition from EMM-REGISTERED to EMM-DEREGISTERED may not necessarily occur in reply to deactivation of the last (default) EPS bearer of a UE.

With this proposed update to the EMM states and potential state transitions, it may also become necessary to clarify that certain sub-clauses or paragraphs in TS 24.301, version 13.4.0, so as to be applicable only when attach without PDN connectivity is supported or not supported by the UE or MME. The following sections set out (using the section numbering of TS 24.301, version 13.4.0) exemplary changes to the text of the relevant sections of TS 24.301, version 13.4.0. It is to be noted that the below changes are suggested only for exemplary proposes and the principles of this disclosure are not intended to be limited to the proposed changes to TS 24.301, version 13.4.0.

### 5.1.3.2.2.4 EMM-REGISTERED

In the state EMM-REGISTERED an EMM context has been established. If attach without PDN connectivity is not supported by the UE or the MME, then additionally a default EPS bearer context has been activated in the UE. When the UE is in EMM-IDLE mode, the UE location is known to the MME with an accuracy of a list of tracking areas containing a certain number of tracking areas. When the UE is in EMM-CONNECTED mode, the UE location is known to the MME with an accuracy of a serving eNodeB. The UE may initiate sending and receiving user data and signalling information and reply to paging. Additionally, tracking area updating or combined tracking area updating procedure is performed (see subclause 5.5.3).

### 5.1.3.4.3 EMM-REGISTERED

In the state EMM-REGISTERED, an EMM context has been established. If attach without PDN connectivity is not supported by the UE or the MME, then additionally a default EPS bearer context has been activated in the MME.

### 5.1.4 Coordination between EMM and GMM

If GMM and EMM are both enabled, a UE capable of S1 mode and A/Gb mode or Iu mode or both shall maintain one common registration for GMM and EMM indicating whether the UE is registered for packet services or not.

A UE that is not registered shall be in state GMM-DEREGISTERED and in state EMM-DEREGISTERED.

If the UE performs a successful attach or combined attach procedure in S1 mode, it shall enter substates GMM-REGISTERED.NO-CELL-AVAILABLE and EMM-REGISTERED.NORMAL-SERVICE. The UE resets the attach attempt counter and the GPRS attach attempt counter (see 3GPP TS 24.008 [13]).

If the UE performs a successful GPRS attach or combined GPRS attach procedure in A/Gb or Iu mode, it shall enter substates GMM-REGISTERED.NORMAL-SERVICE and EMM-REGISTERED.NO-CELL-AVAILABLE. The UE resets the attach attempt counter and the GPRS attach attempt counter (see 3GPP TS 24.008 [13]).

At intersystem change from A/Gb or Iu mode to S1 mode when no PDP context is active, if attach without PDN connectivity is not supported by the UE or the MME, the UE shall move to state EMM-DEREGISTERED and state GMM-DEREGISTERED and then initiate an attach procedure. If attach without PDN connectivity is supported by the UE and the MME, the UE may stay in state EMM-REGISTERED and state GMM-DEREGISTERED and initiate a tracking area updating procedure.

After successful completion of routing area updating or combined routing area updating and tracking area updating or combined tracking area updating procedures in both S1 mode and A/Gb or Iu mode, if the network has indicated that ISR is activated, the UE shall maintain registration and related periodic update timers in both GMM and EMM.

### 5.5.1.1 General

The attach procedure is used to attach to an EPC for packet services in EPS.

The attach procedure is used for three purposes:
- by a UE in PS mode of operation to attach for EPS services only;
- by a UE in CS/PS mode 1 or CS/PS mode 2 of operation to attach for both EPS and non-EPS services; or
- to attach for emergency bearer services.

The lower layers indicate to NAS that the network does not support emergency bearer services for the UE in limited service state (3GPP TS 36.331 [22]). This information is taken into account when deciding whether to initiate attach for emergency bearer services. If the MME does not support an attach for emergency bearer services, the MME shall reject any request to attach with an attach type set to "EPS emergency attach".

With a successful attach procedure, a context is established for the UE in the MME, and, if requested by the UE, additionally a default bearer is established between the UE and the PDN GW, thus enabling always-on IP connectivity to the UE. The network may also initiate the activation of dedicated bearers as part of the attach procedure.

If attach without PDN connectivity is supported by the UE and the MME, a default bearer need not be requested by the UE during the attach procedure. If attach without PDN connectivity is not supported by the UE or the MME, then the UE shall request establishment of a default bearer.

During the attach procedure with default bearer establishment, the UE may also obtain the home agent IPv4 or IPv6 address or both.

### 5.5.1.2.2 Attach procedure initiation

In state EMM-DEREGISTERED, the UE initiates the attach procedure by sending an ATTACH REQUEST message to the MME, starting timer T3410 and entering state EMM-REGISTERED-INITIATED (see example in figure 5.5.1.2.2.1). If timer T3402 is currently running, the UE shall stop timer T3402. If timer T3411 is currently running, the UE shall stop timer T3411.

If the UE is configured for "AttachWithIMSI" as specified in 3GPP TS 24.368 [15A] or 3GPP TS 31.102 [17] and the selected PLMN is neither the registered PLMN nor in the list of equivalent PLMNs, the UE shall include the IMSI in the EPS mobile identity IE in the ATTACH REQUEST message.

For all other cases, the UE shall handle the EPS mobile identity IE in the ATTACH REQUEST message as follows:
If the UE supports CloT EPS optimizations, it shall indicate in the Preferred network behaviour information element whether it supports attach without PDN connectivity.

If attach without PDN connectivity is not supported by the network, or if the UE wants to request PDN connectivity with the attach procedure, the UE shall send the ATTACH REQUEST message together with a PDN CONNECTIVITY REQUEST message contained in the ESM message container information element.

If attach without PDN connectivity is supported by the UE and the MME, and the UE does not want to request PDN connectivity with the attach procedure, the UE shall send the ATTACH REQUEST message together with an ESM DUMMY MESSAGE contained in the ESM message container information element.

### Alternate solutions:

In some embodiments UE may do following instead of sending ESM DUMMY MESSAGE
- Send PDN Connectivity Request message with message length set to zero.
- Send another existing ESM message with length field set to zero

### 5.5.1.2.4 Attach accepted by the network

During an attach for emergency bearer services, if not restricted by local regulations, the MME shall not check for mobility and access restrictions, regional restrictions, subscription restrictions, or perform CSG access control when processing the ATTACH REQUEST message. The network shall not apply subscribed APN based congestion control during an attach procedure for emergency bearer services.

If the attach request is accepted by the network, the MME shall send an ATTACH ACCEPT message to the UE and start timer T3450. If the UE requested establishment of a PDN connection together with the ATTACH REQUEST message, the MME shall send the ATTACH ACCEPT message together with an ACTIVATE DEFAULT EPS BEARER CONTEXT REQUEST message contained in the ESM message container information element to activate the default bearer (see subclause 6.4.1). The network may also initiate the activation of dedicated bearers towards the UE by invoking the dedicated EPS bearer context activation procedure (see subclause 6.4.2).

If attach without PDN connectivity is supported by the UE and the MME, the UE requested establishment of a PDN connection together with the ATTACH REQUEST message, and the attach procedure fails due to a default EPS bearer setup failure, an ESM procedure failure, or operator determined barring is applied on default EPS bearer context activation during the attach procedure, the MME shall
- send an ATTACH ACCEPT message together with a PDN CONNECTIVITY REJECT message contained in the ESM message container information element; or
- send an ATTACH REJECT message with the EMM cause set to #15 "No suitable cells in tracking area", if the PDN connectivity reject is due to ESM cause #29 subject to operator policies. For further details see subclause 5.5.1.2.5.

If attach without PDN connectivity is supported by the UE and the MME, and the UE included an ESM DUMMY MESSAGE in the ESM message container information element of the ATTACH REQUEST message, the MME shall send the ATTACH ACCEPT message together with an ESM DUMMY MESSAGE contained in the ESM message container information element.

If the attach request is accepted by the network, the MME shall delete the stored UE radio capability information, if any.

If the UE has included the UE network capability IE or the MS network capability IE or both in the ATTACH REQUEST message, the MME shall store all octets received from the UE, up to the maximum length defined for the respective information element.
NOTE 1: This information is forwarded to the new MME during inter-MME handover or to the new SGSN during inter-system handover to A/Gb mode or Iu mode.
NOTE 2: For further details concerning the handling of the MS network capability and UE network capability in the MME see also 3GPP TS 23.401 [10].

If the UE specific DRX parameter was included in the DRX Parameter IE in the ATTACH REQUEST message, the MME shall replace any stored UE specific DRX parameter with the received parameter and use it for the downlink transfer of signalling and user data.

The MME shall include the extended DRX parameters IE in the ATTACH ACCEPT message only if the extended DRX parameters IE was included in the ATTACH REQUEST message, and the MME supports and accepts the use of eDRX.

The MME shall assign and include the TAI list the UE is registered to in the ATTACH ACCEPT message. The UE, upon receiving an ATTACH ACCEPT message, shall delete its old TAI list and store the received TAI list.

The MME may include T3412 extended value IE in the ATTACH ACCEPT message only if the UE indicates support of the extended periodic timer T3412 in the MS network feature support IE in the ATTACH REQUEST message.

The MME shall include the T3324 value IE in the ATTACH ACCEPT message only if the T3324 value IE was included in the ATTACH REQUEST message, and the MME supports and accepts the use of PSM.

If the MME supports and accepts the use of PSM, and the UE included the T3412 extended value IE in the ATTACH REQUEST message, then the MME shall take into account the T3412 value requested when providing the T3412 value IE and the T3412 extended value IE in the ATTACH ACCEPT message.
NOTE 3: Besides the value requested by the UE, the MME can take local configuration or subscription data provided by the HSS into account when selecting a value for T3412 (3GPP TS 23.401 [10] subclause 4.3.17.3).

If the Preferred network behaviour information element was included in the ATTACH REQUEST message, and the network supports CloT EPS optimizations, the MME shall include the Supported network behaviour information element in the ATTACH ACCEPT message, indicating whether it supports attach without PDN connectivity. The UE and the MME shall use the information whether the peer entity supports attach without PDN connectivity as specified in the present clause 5 and in clause 6.

Upon receiving the ATTACH ACCEPT message, the UE shall stop timer T3410.

### <snip>

When the UE receives the ATTACH ACCEPT message combined with the ACTIVATE DEFAULT EPS BEARER CONTEXT REQUEST message, it shall forward the ACTIVATE DEFAULT EPS BEARER CONTEXT REQUEST message to the ESM sublayer. Upon receipt of an indication from the ESM sublayer that the default EPS bearer context has been activated, the UE shall send an ATTACH COMPLETE message together with an ACTIVATE DEFAULT EPS BEARER CONTEXT ACCEPT message contained in the ESM message container information element to the network.

If attach without PDN connectivity is supported by the UE and the MME, and the UE receives the ATTACH ACCEPT message combined with an ESM DUMMY MESSAGE, the UE shall send an ATTACH COMPLETE message together with an ESM DUMMY MESSAGE contained in the ESM message container information element to the network.

If attach without PDN connectivity is supported by the UE and the MME, and the UE receives the ATTACH ACCEPT message combined with a PDN CONNECTIVITY REJECT message, the UE shall send an ATTACH COMPLETE message together with an ESM DUMMY MESSAGE contained in the ESM message container information element to the network.

### Alternate solution:

If attach without PDN connectivity is supported by the UE and the MME, and the UE receives the ATTACH ACCEPT message combined with a PDN CONNECTIVITY REJECT message, the UE shall send an ATTACH REJECT message to the network. For this case the EMM cause value in the ATTACH REJECT message shall be set to #19 "ESM failure".

### 5.5.1.2.5 Attach not accepted by the network

If the attach request cannot be accepted by the network, the MME shall send an ATTACH REJECT message to the UE including an appropriate EMM cause value. If attach without PDN connectivity is not supported by the UE or the MME, and the attach procedure fails due to a default EPS bearer setup failure, an ESM procedure failure, or operator determined barring is applied on default EPS bearer context activation during attach procedure, the MME shall:
- combine the ATTACH REJECT message with a PDN CONNECTIVITY REJECT message contained in the ESM message container information element. In this case the EMM cause value in the ATTACH REJECT message shall be set to #19 "ESM failure"; or
- send the ATTACH REJECT message with the EMM cause set to #15 "No suitable cells in tracking area", if the PDN connectivity reject is due to ESM cause #29 subject to operator policies (see 3GPP TS 29.274 [16D] for further details). In this case, the network may additionally include the Extended EMM cause IE with value "EUTRAN not allowed".

If attach without PDN connectivity is not supported by the MME, and the UE included a message different from a PDN CONNECTIVITY REQUEST message in the ESM message container information element of the ATTACH REQUEST message, the MME shall respond with an ATTACH REJECT message together with an ESM STATUS message contained in the ESM message container information element. For this case the EMM cause value in the ATTACH REJECT message shall be set to #19 "ESM failure" and the ESM cause to #97 "message type non-existent or not implemented".

### 5.5.1.2.6 Abnormal cases in the UE

The following abnormal cases can be identified:
j) If attach without PDN connectivity is not supported by the UE or the MME, and the ACTIVATE DEFAULT BEARER CONTEXT REQUEST message combined with the ATTACH ACCEPT is not accepted by the UE due to failure in the UE ESM sublayer, then the UE shall initiate the detach procedure by sending a DETACH REQUEST message to the network. Further UE behaviour is implementation specific.

### 5.5.1.3.4.2 Combined attach successful

The description for attach for EPS services as specified in subclause 5.5.1.2.4 shall be followed. In addition, the following description for attach for non-EPS services or "SMS only" applies.

### <snip>

The UE, when receiving the ATTACH ACCEPT message combined with the ACTIVATE DEFAULT EPS BEARER CONTEXT REQUEST message, shall send an ATTACH COMPLETE message combined with an ACTIVATE DEFAULT EPS BEARER CONTEXT ACCEPT message to the network.

If attach without PDN connectivity is supported by the UE and the MME, and the UE receives the ATTACH ACCEPT message combined with an ESM DUMMY MESSAGE, the UE shall send an ATTACH COMPLETE message together with an ESM DUMMY MESSAGE contained in the ESM message container information element to the network.

If attach without PDN connectivity is supported by the UE and the MME, and the UE receives the ATTACH ACCEPT message combined with a PDN CONNECTIVITY REJECT message, the UE shall send an ATTACH COMPLETE message together with an ESM DUMMY MESSAGE contained in the ESM message container information element to the network.

Upon transmission of the ATTACH COMPLETE message the UE shall enter state EMM-REGISTERED and MM state MM-IDLE and set the EPS update status to EU1 UPDATED.

### 5.5.1.3.5 Combined attach not accepted by the network

If the attach request can neither be accepted by the network for EPS nor for non-EPS services, the MME shall send an ATTACH REJECT message to the UE including an appropriate EMM cause value. If attach without PDN connectivity is not supported by the UE or the MME, and the attach procedure fails due to a default EPS bearer setup failure, an ESM procedure failure or operator determined barring, the MME shall:
- combine the ATTACH REJECT message with a PDN CONNECTIVITY REJECT message. In this case the EMM cause value in the ATTACH REJECT message shall be set to #19, "ESM failure"; or
- send the ATTACH REJECT message with the EMM cause set to #15 "No suitable cells in tracking area" ,if the PDN connectivity reject is due to ESM cause #29 subject to operator policies (see 3GPP TS 29.274 [16D] for further details). In this case, the network may additionally include the Extended EMM cause IE with value "EUTRAN not allowed".

If attach without PDN connectivity is not supported by the MME, and the UE included a message different from a PDN CONNECTIVITY REQUEST message in the ESM message container information element of the ATTACH REQUEST message, the MME shall respond with an ATTACH REJECT message together with an ESM STATUS message contained in the ESM message container information element. For this case the EMM cause value in the ATTACH REJECT message shall be set to #19 "ESM failure" and the ESM cause to #97 "message type non-existent or not implemented".

If the attach request is rejected due to NAS level mobility management congestion control, the network shall set the EMM cause value to #22 "congestion" and assign a back-off timer T3346.

### 5.5.3.2.4 Normal and periodic tracking area updating procedure accepted by the network

If the tracking area update request has been accepted by the network, the MME shall send a TRACKING AREA UPDATE ACCEPT message to the UE. If the MME assigns a new GUTI for the UE, a GUTI shall be included in the TRACKING AREA UPDATE ACCEPT message. In this case, the MME shall start timer T3450 and enter state EMM-COMMON-PROCEDURE-INITIATED as described in subclause 5.4.1. The MME may include a new TAI list for the UE in the TRACKING AREA UPDATE ACCEPT message.

If the UE has included the UE network capability IE or the MS network capability IE or both in the TRACKING AREA UPDATE REQUEST message, the MME shall store all octets received from the UE, up to the maximum length defined for the respective information element.

NOTE 1: This information is forwarded to the new MME during inter-MME handover or to the new SGSN during inter-system handover to A/Gb mode or Iu mode.
NOTE 2: For further details concerning the handling of the MS network capability and UE network capability in the MME see also 3GPP TS 23.401 [10].

If a UE radio capability information update needed IE is included in the TRACKING AREA UPDATE REQUEST message, the MME shall delete the stored UE radio capability information, if any.

If the UE specific DRX parameter was included in the DRX Parameter IE in the TRACKING AREA UPDATE REQUEST message, the network shall replace any stored UE specific DRX parameter with the received parameter and use it for the downlink transfer of signalling and user data.

The MME shall include the extended DRX parameters IE in the TRACKING AREA UPDATE ACCEPT message only if the extended DRX parameters IE was included in the TRACKING AREA UPDATE REQUEST message, and the MME supports and accepts the use of eDRX.

If the Preferred network behaviour information element was included in the TRACKING AREA UPDATE REQUEST message, and the network supports CloT EPS optimizations, the MME shall include the Supported network behaviour information element in the TRACKING AREA UPDATE ACCEPT message, indicating whether it supports attach without PDN connectivity. The UE and the MME shall use the information whether the peer entity supports attach without PDN connectivity as specified in the present clause 5 and in clause 6.

If an EPS bearer context status IE is included in the TRACKING AREA UPDATE REQUEST message, the MME shall deactivate all those EPS bearer contexts locally (without peer-to-peer signalling between the MME and the UE) which are in ESM state BEARER CONTEXT ACTIVE or BEARER CONTEXT MODIFY PENDING on the network side, but are indicated by the UE as being in ESM state BEARER CONTEXT INACTIVE. If a default EPS bearer context is marked as inactive in the EPS bearer context status IE included in the TRACKING AREA UPDATE REQUEST message, and this default bearer is not associated with the last remaining PDN connection of the UE in the MME, the MME shall locally deactivate all EPS bearer contexts associated to the PDN connection with the default EPS bearer context without peer-to-peer ESM signalling to the UE. If the default bearer is associated with the last remaining PDN connection of the UE in the MME, and attach without PDN connectivity is supported by the UE and the MME, the MME shall locally deactivate all EPS bearer contexts associated to the PDN connection with the default EPS bearer context without peer-to-peer ESM signalling to the UE.

### 5.6.1.4 Service request procedure accepted by the network

For cases a, b, c, h, k and 1 in subclause 5.6.1.1, the UE shall treat the indication from the lower layers that the user plane radio bearer is set up as successful completion of the procedure. The UE shall reset the service request attempt counter, stop the timer T3417 and enter the state EMM-REGISTERED.

If the service type information element in the EXTENDED SERVICE REQUEST message indicates "mobile terminating CS fallback or 1xCS fallback" and the CSFB response IE, if included, indicates "CS fallback accepted by the UE", or if the service type information element in the EXTENDED SERVICE REQUEST message indicates "mobile originating CS fallback or 1xCS fallback" or "mobile originating CS fallback emergency call or 1xCS fallback emergency call", the network initiates CS fallback or 1xCS fallback procedures.

If the EPS bearer context status IE is included in the EXTENDED SERVICE REQUEST message, the network shall deactivate all those EPS bearer contexts locally (without peer-to-peer signalling between the network and the UE) which are active on the network side but are indicated by the UE as being inactive. If a default EPS bearer context is marked as inactive in the EPS bearer context status IE included in the EXTENDED SERVICE REQUEST message, and this default bearer is not associated with the last remaining PDN connection of the UE in the MME, the MME shall locally deactivate all EPS bearer contexts associated to the PDN connection with the default EPS bearer context without peer-to-peer ESM signalling to the UE. If the default bearer is associated with the last remaining PDN connection of the UE in the MME, and attach without PDN connectivity is supported by the UE and the MME, the MME shall locally deactivate all EPS bearer contexts associated to the PDN connection with the default EPS bearer context without peer-to-peer ESM signalling to the UE.

### 6.3.2 Principles of address handling for ESM procedures

Transaction related procedures use the procedure transaction identity as address parameter in the ESM message header. When the UE or the network initiates a transaction related procedure, it shall include a valid procedure transaction identity value in the message header and set the EPS bearer identity to "no EPS bearer identity assigned".

If the response message is again a transaction related message, e.g. a PDN CONNECTIVITY REJECT, PDN DISCONNECT REJECT, BEARER RESOURCE ALLOCATION REJECT, BEARER RESOURCE MODIFICATION REJECT or ESM INFORMATION REQUEST message from the network or an ESM INFORMATION RESPONSE message from the UE, the sending entity shall include the procedure transaction identity value received with the request message and set the EPS bearer identity to "no EPS bearer identity assigned" (see examples in figures 6.3.2.1 and 6.3.2.2).

If an ESM DUMMY MESSAGE is sent in response to a received ESM DUMMY MESSAGE, the sending entity shall include the received procedure transaction identity value in the message header and set the EPS bearer identity to "no EPS bearer identity assigned".

### 6.4.4.4 Abnormal cases in the UE

The following abnormal case can be identified:
a) UE is requested to deactivate a default EPS bearer context of the last remaining PDN connection:
   If attach without PDN connectivity is not supported by the UE or the MME, and the UE determines that the EPS bearer indicated in the DEACTIVATE EPS BEARER CONTEXT REQUEST message is the default EPS bearer of the last remaining PDN connection that the UE has, then the UE shall respond by performing a detach procedure. Additionally, the UE should perform an attach procedure.
   If attach without PDN connectivity is supported by the UE and the MME, the UE shall proceed with the deactivation procedure as specified in subclause 6.4.4.3.
      NOTE: User interaction is necessary in some cases when the UE cannot re-activate the EPS bearer(s) automatically.

### 8.3.12A ESM dummy message

This message is sent by the UE or the network included in an ESM message container information element during an attach procedure, if the UE does not request for PDN connectivity. See table 8.3.12A.1.

Message type: ESM DUMMY MESSAGE

| | |
|---|---|
| Significance: | dual |
| Direction: | both |

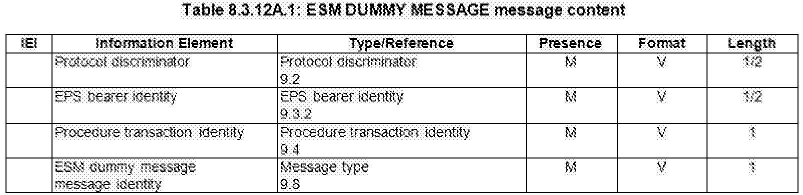

### 8.2.1.1 Message definition

This message is sent by the network to the UE to indicate that the corresponding attach request has been accepted. See table 8.2.1.1.

Message type: ATTACH ACCEPT

| | |
|---|---|
| Significance: | dual |
| Direction: | network to UE |

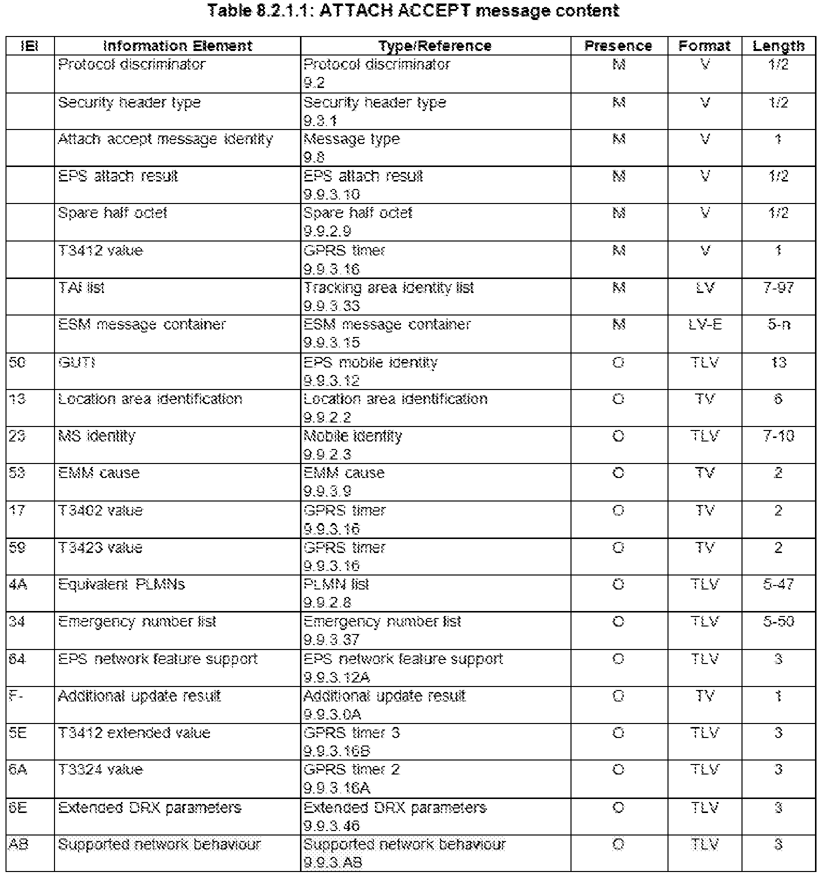

### 8.2.4.1 Message definition

This message is sent by the UE to the network in order to perform an attach procedure. See table 8.2.4.1.

Message type: ATTACH REQUEST

| | |
|---|---|
| Significance: | dual |
| Direction: | UE to network |

**Table 8.2.4.1: ATTACH REQUEST message content**

| **IEI** | **Information Element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Attach request message identity | Message type 9.8 | M | V | 1 |
| | EPS attach type | EPS attach type 9.9.3.11 | M | V | 1/2 |
| | NAS key set identifier | NAS Key set identifier 9.9.3.21 | M | V | 1/2 |
| | EPS mobile identity | EPS mobile identity 9.9.3.12 | M | LV | 5-12 |
| | UE network capacity | UE network capability 9.9.3.34 | M | LV | 3-14 |
| | ESM message container | ESM message container 9.9.3.15 | M | LV-E | 5-n |
| 19 | Old P-TMSI signature | P-TMSI signature 9.9.3.26 | O | TV | 4 |
| 50 | Additional GUTI | EPS mobile identity 9.9.3.12 | O | TLV | 13 |
| 52 | Last visited registered TAI | Tracking area identity 9.9.3.32 | O | TV | 6 |
| 5C | DRX parameter | DRX parameter 9.9.3.8 | O | TV | 3 |
| 31 | MS network capability | MS network capability 9.9.3.20 | O | TLV | 4-10 |
| 13 | Old location area identification | Location area identification 9.9.2.2 | O | TV | 6 |
| 9- | TMSI status | TMSI status 9.9.3.31 | O | TV | 1 |
| 11 | Mobile station classmark 2 | Mobile station classmark 2 9.9.2.4 | O | TLV | 5 |
| 20 | Mobile station classmark 3 | Mobile station classmark 3 9.9.2.5 | O | TLV | 2-34 |
| 40 | Supported Codecs | Supported Codec List 9.9.2.10 | O | TLV | 5-n |
| F- | Additional update type | Additional update type 9.9.3.08 | O | TV | 1 |
| 5D | Voice domain preference and UE's usage setting | Voice domain preference and UE's usage setting 9.9.3.44 | O | TLV | 3 |
| D- | Device properties | Device properties 9.9.2.0A | O | TV | 1 |
| E- | Old GUTI type | GUTI type 9.9.3.45 | O | TV | 1 |
| C- | MS network feature support | MS network feature support 9.9.3.20A | O | TV | 1 |
| 10 | TMSI based NRI container | Network resource identifier container 9.9.3.24A | O | TLV | 4 |
| 6A | T3324 value | GPRS timer 2 9.9.3.16A | O | TLV | 3 |
| 5E | T3412 extended value | GPRS timer 3 9.9.3.16B | O | TLV | 3 |
| 6E | Extended DRX parameters | Extended DRX parameters 9.9.3.46 | O | TLV | 3 |
| XY | Preferred network behaviour | Preferred network behaviour 9.9.3.XY | O | TLV | 3 |

### 8.2.26.1 Message definition

This message is sent by the network to the UE to provide the UE with EPS mobility management related data in response to a tracking area update request message. See table 8.2.26.1.

Message type: TRACKING AREA UPDATE ACCEPT

| | |
|---|---|
| Significance: | dual |
| Direction: | network to UE |

**Table 8.2.26.1: TRACKING AREA UPDATE ACCEPT message content**

| **IEI** | **Information Element** | **Type/Reference** | **Presence** | **Format** | **Length** |
|---|---|---|---|---|---|
| | Protocol discriminator | Protocol discriminator 9.2 | M | V | 1/2 |
| | Security Header type | Security header type 9.3.1 | M | V | 1/2 |
| | Tracking area update accept message identity | Message type 9.8 | M | V | 1 |
| | EPS update result | EPS update result 9.9.3.13 | M | V | 1/2 |
| | Spare half octet | Spare half octet 9.9.2.9 | M | V | 1/2 |
| 5A | T3412 value | GPRS timer 9.9.3.16 | O | TV | 2 |
| 50 | GUTI | EPS mobile identity 9.9.3.12 | O | TLV | 13 |
| 54 | TAI list | Tracking area identity list 9.9.3.33 | O | TLV | 8-98 |
| 57 | EPS Dearer context status | EPS bearer context status 9.9.2.1 | O | TLV | 4 |
| 13 | Location area identification | Location area identification 9.9.22 | O | TV | 6 |
| 23 | MS identity | Mobile identity 9.9.2.3 | O | TLV | 7-10 |
| 53 | EMM cause | EMM cause 9.9.3.9 | O | TV | 2 |
| 17 | T3402 value | GPRS timer 9.9.3.16 | O | TV | 2 |
| 59 | T3423 value | GPRS timer 9.9.3.16 | O | TV | 2 |
| 4A | Equivalent PLMNs | PLMN list 9.9.2.8 | O | TLV | 5-47 |
| 34 | Emergency number list | Emergency number list 9.9.3.37 | O | TLV | 5-50 |
| 64 | EPS network feature support | EPS network feature support 9.9.3.12A | O | TLV | 3 |
| F- | Additional update result | Additional update result 9.9. 3.0A | O | TV | 1 |
| 5E | T3412 extended value | GPRS timer 3 9.9.3.16B | O | TLV | 3 |
| 6A | T3324 value | GPRS timer 2 9.9.3.16A | O | TLV | 3 |
| 6E | Extended DRX parameters | Extended DRX parameters 9.9.3.46 | O | TLV | 3 |
| AB | Supported network behaviour | Supported network behaviour 9.9.3.AB | O | TLV | 3 |

### 8.2.29.1 Message definition

The purposes of sending the tracking area update request by the UE to the network are described in subclause 5.5.3.1. See table 8.2.29.1.

Message type: TRACKING AREA UPDATE REQUEST

| | |
|---|---|
| Significance: | dual |
| Direction: | UE to network |

**Table 8.2.29.1: TRACKING AREA UPDATE REQUEST message content**

| **IEI** | **Information Element** | **Type/Reference** | **Presence** | **Format** | **Length** |
|---|---|---|---|---|---|
| | Protocol discriminator | Protocol discriminator 9.2 | M | V | 1/2 |
| | Security header type | Security header type 9.3.1 | M | V | 1/2 |
| | Tracking area update request message identity | Message type 9.8 | M | V | 1 |
| | EPS update type | EPS update type 9.9.3.14 | M | V | 1/2 |
| | NAS key set identifier | NAS key set identifier 9.9.3.21 | M | V | 1/2 |
| | Old GUTI | EPS mobile identity 9.9.3.12 | M | LV | 12 |
| B- | Non-current native NAS key set identifier | NAS key set identifier 9.9.3.21 | O | TV | 1 |
| 8- | GPRS ciphering key sequence number | Ciphering key sequence number 9.9.3.4a | O | TV | 1 |
| 19 | Old P-TMSI signature | P-TMSI signature 9.9.3.26 | O | TV | 4 |
| 50 | Additional GUTI | EPS mobile identity 9.9.3.12 | O | TLV | 13 |
| 55 | Nonce_{UE} | Nonce 9.9.3.25 | O | TV | 5 |
| 58 | UE network capability | UE network capability 9.9.3.34 | O | TLV | 4-15 |
| 52 | Last visited registered TAI | Tracking area identity 9.9.3.32 | O | TV | 6 |
| 5C | DRX parameter | DRX parameter 9.9.3.8 | O | TV | 3 |
| A- | UE radio capability information update needed | UE radio capability information update needed 9.9.3.35 | O | TV | 1 |
| 57 | EPS bearer context status | EPS bearer context status 9.9.2.1 | O | TLV | 4 |
| 31 | MS network capability | MS network capability 9.9.3.20 | O | TLV | 4-10 |
| 13 | Old location area identification | Location area identification 9.9.2.2 | O | TV | 6 |
| 9- | TMSI status | TMSI status 9.9.3.31 | O | TV | 1 |
| 11 | Mobile station classmark 2 | Mobile station classmark 2 9.9.2.4 | O | TLV | 5 |
| 20 | Mobile station classmark 3 | Mobile station classmark 3 9.9.2.5 | O | TLV | 2-34 |
| 40 | Supported Codecs | Supported Codec List 9.9.2.10 | O | TLV | 5-n |
| F- | Additional update type | Additional update type 9.9.3.0B | O | TV | 1 |
| 5D | Voice domain preference and UE's usage setting | Voice domain preference and UE's usage setting 9.9.3.44 | O | TLV | 3 |
| E- | Old GUTI type | GUTI type 9.9.3.45 | O | TV | 1 |
| D- | Device properties | Device properties 9.9.2.0A | O | TV | 1 |
| C- | MS network feature support | MS network feature support 9.9.3.20A | O | TV | 1 |
| 10 | TMSI based NRI container | Network resource identifier container 9.9.3.24A | O | TLV | 4 |
| 6A | T3324 value | GPRS timer 2 9.9.3.16 | O | TLV | 3 |
| 5E | T3412 extended value | GPRS timer 3 9.9.3.16B | O | TLV | 3 |
| 6E | Extended DRX parameters | Extended DRX parameters 9.9.3.46 | O | TLV | 3 |
| XY | Preferred network behaviour | Preferred network behaviour 9.9.3.XY | O | TLV | 3 |

### 9.9.3.AB Supported network behaviour

The purpose of the Supported network behaviour information element is to provide the UE with the network behaviour the network supports and what it accepts to use.

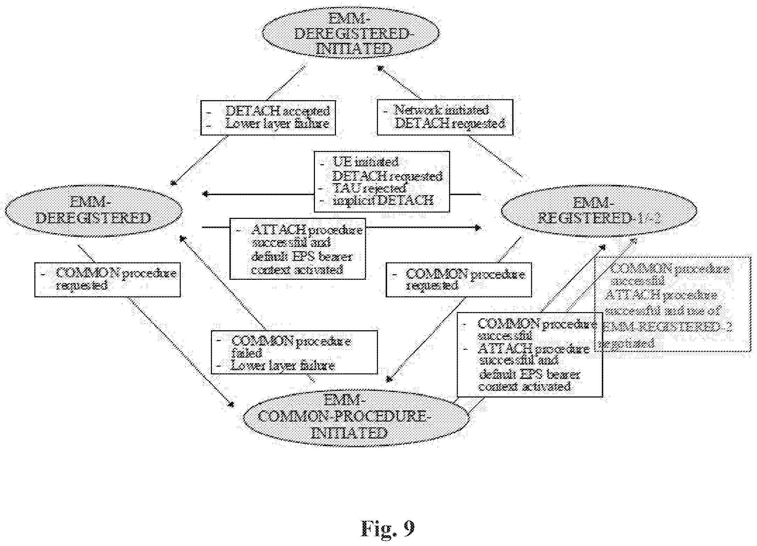

The Supported network behaviour information element is coded as shown in figure 9.9.3.AB and table 9.9.3.AB.

The Supported network behaviour is a type 4 information element with minimum length of 3.

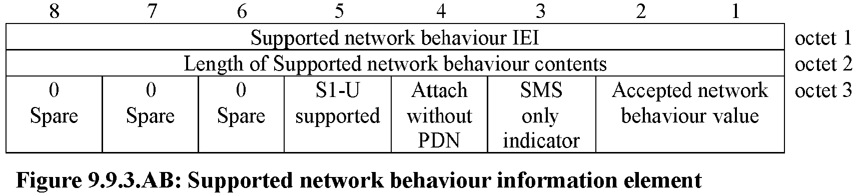

**Table 9.9.3.AB: Supported network behaviour information element**

| **Accepted network behaviour value (octet 3, bit 1 to 2)** | | |
|---|---|---|
| **Bit** | | |
| **2** | **1** | |
| 0 | 0 | Control Plane CloT EPS optimization accepted |
| 0 | 1 | User Plane CloT EPS optimization accepted |
| 1 | 0 | reserved |
| 1 | 1 | reserved |

| **SMS only indicator (octet 3, bit 3)** | | |
|---|---|---|
| **Bit 3** | | |
| 0 | SMS only not accepted | |
| 1 | SMS only accepted | |

| **Bit 4** | | |
|---|---|---|
| 0 | Attach without PDN connectivity not supported | |
| 1 | Attach without PDN connectivity supported | |

| **Bit 5** | | |
|---|---|---|
| 0 | S1-U data transfer not supported | |
| 1 | S1-U data transfer supported | |

### 9.9.3.XY Preferred network behaviour

The purpose of the Preferred network behaviour information element is to provide the network with the network behaviour the UE supports and what it prefers to use. The network uses the Preferred network behaviour information element when deciding to accept or reject an attach procedure.

The Preferred network behaviour information element is coded as shown in figure 9.9.3.XY and table 9.9.3.XY.

The Preferred network behaviour is a type 4 information element with minimum length of 3.

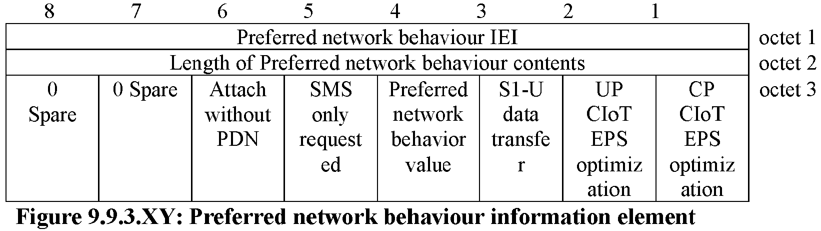

**Table 9.9.3.XY: Preferred network behaviour information element**

| **Control Plane CloT EPS optimization indicator (octet 3, bit 1)** | |
|---|---|
| Bit 1 | |
| 0 | Control Plane CloT EPS optimization not supported |
| 1 | Control Plane CloT EPS optimization supported |
| A UE supporting NB-IoT shall indicate "Control Plane CloT EPS optimization supported". | |

| **User Plane CloT EPS optimization indicator (octet 3, bit 2)** | |
|---|---|
| Bit 2 | |
| 0 | User Plane CloT EPS optimization not supported |
| 1 | User Plane CloT EPS optimization supported |

| **S1-U data transfer indicator (octet 3, bit 3)** | |
|---|---|
| Bit 3 | |
| 0 | S1-U data transfer not supported |
| 1 | S1-U data transfer supported |

| **Preferred network behaviour value (octet 3, bit 4)** | |
|---|---|
| Bit 4 | |
| 0 | Control Plane CloT EPS optimization preferred |
| 1 | User Plane CloT EPS optimization preferred |

| **SMS only requested (octet 3, bit 5)** | |
|---|---|
| Bit 5 | |
| 0 | SMS only not requested |
| 1 | SMS only requested |

| **Attach without PDN Connectivity indicator (octet 3, bit 6)** | |
|---|---|
| Bit 6 | |
| 0 | Attach without PDN Connectivity not supported |
| 1 | Attach without PDN Connectivity supported |

In the embodiments herein above, it has been assumed that the legacy EMM-REGISTERED state is updated so that in the new EMM-REGISTERED state the UE has an EMM context in the MME, and where it may have 0, 1 or more PDN connections established. Another option, in accordance with further embodiments, is to split the EMM-REGISTERED state into two "flavors", which are exemplarily referred to as EMM-REGISTERED-1 and EMM-REGISTERED-2. EMM-REGISTERED-1 would be the same as the legacy state "EMM-REGISTERED" state known from 3GPP LTE Release 8 to Release 12. The new EMM-REGISTERED-2 is the new "registered" state where the UE has an EMM context in the MME, and where it may have 0, 1 or more PDN connections established. Hence, EMM-REGISTERED-2 is more similar to GMM-REGISTERED, as it is independent of the number of EPS bearer contexts/PDP contexts activated.

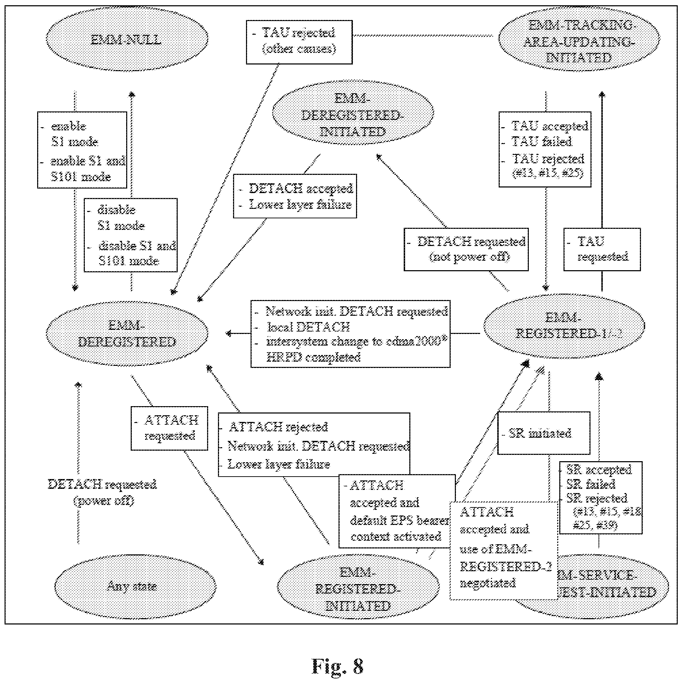

The logic in the UE and in the MME is as follows and highlighted in Figs. 8 and 9. Fig. 8 shows an overview of the main EMM states in a UE and transitions between those states according to embodiments of the invention, where the EMM-REGISTERED state is split into two "flavors". Fig. 9 shows overview of the main EMM states in a Mobility Management Entity (MME) and transitions between those states according to embodiments of the invention, where the EMM-REGISTERED state is split into two "flavors".

When 3GPP TS 24.301, version 13.4.0 specifies that the UE (or MME) enters "EMM-REGISTERED", the UE (or MME) enters:
- EMM-REGISTERED-2, if the support of EMM-REGISTERED-2 was successfully negotiated between UE and MME; and
- EMM-REGISTERED-1, otherwise (assuming that the UE has at least 1 PDN connection established; else the new state is EMM-DEREGISTERED).

This would apply to transitions from EMM-REGISTERED-INITIATED, EMM-SERVICE-REQUEST-INITIATED and EMM-TRACKING-AREA-UPDATING-INITIATED.

As used herein, the terms "means" and/or "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It is evident that it is also possible to combine means/circuitry performing different functions within a single hardware element, e.g. a digital signal processor (DSP), processor, logic device, IC, etc. For example, the means or circuitry for transmitting and means or circuitry for receiving may be comprised in a single hardware element, e.g. a radio frontend IC. For example, the means or circuitry for encoding and means or circuitry for decoding may also be comprised in a single hardware element, e.g. a baseband processor/IC.

Similarly it is also possible to implement means/circuitry performing a single function across multiple hardware elements, e.g. a processor, logic device, IC, etc. For example, functionality of the means or circuitry for transmitting and means or circuitry for receiving may be distributed across hardware elements, e.g. a physical layer frontend IC (e.g. a radio frontend IC in case of a wireless communication interface) and a baseband processor/IC.

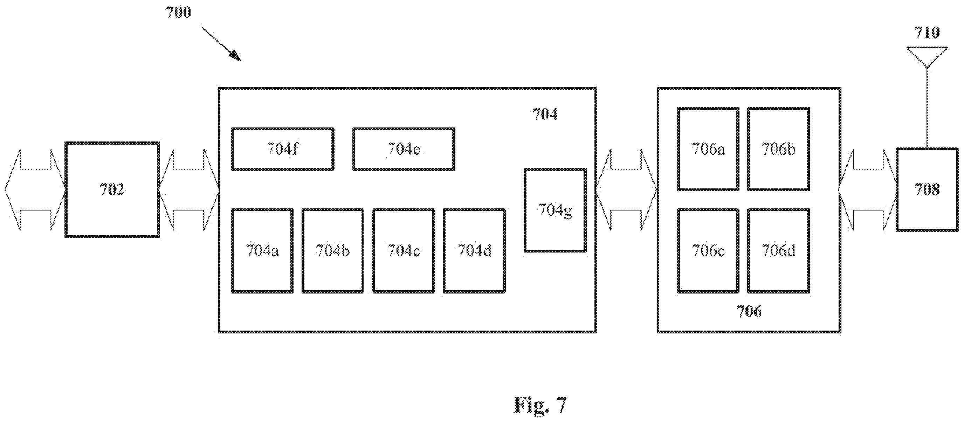

Embodiments described herein may be implemented into a system using any suitably configured hardware and/or software. Fig. 7 illustrates, for one embodiment, example components of an electronic device 700. In embodiments, the electronic device 700 may be, implement, be incorporated into, or otherwise be a part of a UE, an evolved NodeB (eNB), Mobility Management Entity (MME) or some other electronic device. In some embodiments, the electronic device 700 may include application circuitry 702, baseband circuitry 704, Radio Frequency (RF) circuitry 706, front-end module (FEM) circuitry 708 and one or more antennas 170, coupled together at least as shown. In some embodiments, the electronic device 700 - e.g. when implementing an MME or an eNB - may include, in addition to the RF circuitry 706 and FEM circuitry 708 or as an alternative thereto, a network interface card (NIC) and may be connected to the EPC via a wired or optical network. The NIC may comprise a physical layer frontend IC and/or a baseband processor/IC.

The application circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 704 may include circuitry such as, but not limited to, one or more single-core or multi-core processors. The baseband circuitry 704 may include one or more baseband processors and/or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a second generation (2G) baseband processor 704a, third generation (3G) baseband processor 704b, fourth generation (4G) baseband processor 704c, and/or other baseband processor(s) 704d for other existing generations, generations in development or to be developed in the future (e.g., fifth generation (5G), 6G, etc.). The baseband circuitry 704 (e.g., one or more of baseband processors 704a-d) may handle various radio control functions that enable communication with one or more radio networks via the RF circuitry 706. The radio control functions may include, but are not limited to, signal modulation/demodulation, encoding/decoding, radio frequency shifting, etc. In some embodiments, modulation/demodulation circuitry of the baseband circuitry 704 may include Fast-Fourier Transform (FFT), precoding, and/or constellation mapping/demapping functionality. In some embodiments, encoding/decoding circuitry of the baseband circuitry 704 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or RRC elements. A central processing unit (CPU) 704e of the baseband circuitry 704 may be configured to run elements of the protocol stack for signaling of the PHY, MAC, RLC, PDCP and/or RRC layers. In some embodiments, the baseband circuitry may include one or more audio digital signal processor(s) (DSP) 704f. The audio DSP(s) 704f may be include elements for compression/decompression and echo cancellation and may include other suitable processing elements in other embodiments.

The baseband circuitry 704 may further include memory/storage 704g. The memory/storage 704g may be used to load and store data and/or instructions for operations performed by the processors of the baseband circuitry 704. Memory/storage for one embodiment may include any combination of suitable volatile memory and/or non-volatile memory. The memory/storage 704g may include any combination of various levels of memory/storage including, but not limited to, read-only memory (ROM) having embedded software instructions (e.g., firmware), random access memory (e.g., dynamic random access memory (DRAM)), cache, buffers, etc. The memory/storage 704g may be shared among the various processors or dedicated to particular processors.

Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multi-mode baseband circuitry.

RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network. RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the RF circuitry 706 may include a receive signal path and a transmit signal path. The receive signal path of the RF circuitry 706 may include mixer circuitry 706a, amplifier circuitry 706b and filter circuitry 706c. The transmit signal path of the RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from the FEM circuitry 708 based on the synthesized frequency provided by synthesizer circuitry 706d. The amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, mixer circuitry 706a of the receive signal path may comprise passive mixers, although the scope of the embodiments is not limited in this respect.

In some embodiments, the mixer circuitry 706a of the transmit signal path may be configured to up-convert input baseband signals based on the synthesized frequency provided by the synthesizer circuitry 706d to generate RF output signals for the FEM circuitry 708. The baseband signals may be provided by the baseband circuitry 704 and may be filtered by filter circuitry 706c. The filter circuitry 706c may include a low-pass filter (LPF), although the scope of the embodiments is not limited in this respect.

In some embodiments, the mixer circuitry 706a of the receive signal path and the mixer circuitry 706a of the transmit signal path may include two or more mixers and may be arranged for quadrature down-conversion and/or up-conversion respectively. In some embodiments, the mixer circuitry 706a of the receive signal path and the mixer circuitry 706a of the transmit signal path may include two or more mixers and may be arranged for image rejection (e.g., Hartley image rejection). In some embodiments, the mixer circuitry 706a of the receive signal path and the mixer circuitry 706a may be arranged for direct down-conversion and/or direct up-conversion, respectively. In some embodiments, the mixer circuitry 706a of the receive signal path and the mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706d may be a fractional-N synthesizer or a fractional N/N+1 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

The synthesizer circuitry 706d may be configured to synthesize an output frequency for use by the mixer circuitry 706a of the RF circuitry 706 based on a frequency input and a divider control input. In some embodiments, the synthesizer circuitry 706d may be a fractional N/N+1 synthesizer.

In some embodiments, frequency input may be provided by a voltage controlled oscillator (VCO), although that is not a requirement. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

Synthesizer circuitry 706d of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 706 may include an IQ/polar converter.

FEM circuitry 708 may include a receive signal path which may include circuitry configured to operate on RF signals received from one or more antennas 170, amplify the received signals and provide the amplified versions of the received signals to the RF circuitry 706 for further processing. FEM circuitry 708 may also include a transmit signal path which may include circuitry configured to amplify signals for transmission provided by the RF circuitry 706 for transmission by one or more of the one or more antennas 170.

In some embodiments, the FEM circuitry 708 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 706). The transmit signal path of the FEM circuitry 708 may include a power amplifier (PA) to amplify input RF signals (e.g., provided by RF circuitry 706), and one or more filters to generate RF signals for subsequent transmission (e.g., by one or more of the one or more antennas 170.

In some embodiments, the electronic device 700 may include additional elements such as, for example, memory/storage, display, camera, sensor, and/or input/output (I/O) interface.

In some embodiments, the electronic device of Figure 7 may be configured to perform one or more processes, techniques, and/or methods as described herein, or portions thereof.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments, within the scope of the invention defined by the appended claims.

## Claims

1. A user equipment, UE, comprising:
means for transmitting (1001) an attach request message to a mobility management entity, MME, wherein the attach request message comprises:
an indication to the MME that the UE supports an Evolved Packet System, EPS, Mobility Management, EMM, state EMM-REGISTERED without Packet Data Network, PDN, connection, and
an Evolved Packet System, EPS, Session Management, ESM, Dummy Message instead of a Packet Data Network, PDN, Connectivity Request message, wherein the ESM Dummy Message indicates to the MME that the UE requests attachment to the network without establishment of a PDN connection; and
means for receiving (1003) an attach accept message transmitted from the MME, wherein the attach accept message comprises:
an indication to the UE that the MME supports the EMM state EMM-REGISTERED without PDN connection, and
an ESM Dummy Message that indicates to the UE that the MME accepts a request of the UE to attach to the network without establishment of PDN connectivity;
wherein the ESM Dummy Message consists of:
a field for indicating a protocol discriminator;
a field for indicating an EPS bearer identity;
a field for indicating a procedure transaction identity; and
a field for indicating an ESM Dummy Message identity.

2. The UE of claim 1, further comprising means for transmitting (1003) an attach complete message to the MME, wherein the attach complete message comprises an ESM Dummy Message.

3. The UE of claim 1or 2, further comprising means for receiving an attach reject message comprising an ESM message container IE with an ESM status message.

4. The UE of claim 3, wherein the ESM status message indicates a cause #97 "message type non-existent or not implemented";

5. The UE of claim 3 or 4, wherein the attach reject message comprises an EMM cause IE for an EMM cause value which has been set by the MME to #19 "ESM failure".

6. The UE of one of claims 1 to 5, further comprising means for receiving an attach reject message comprising an EMM cause IE for an EMM cause value which has been set by the MME to #15 "No suitable cells in tracking area", to indicate to the UE that the PDN connectivity reject is due to ESM cause #29 subject to operator policies.

7. The UE of one of claims 1 to 6, wherein the ESM Dummy Message is comprised within an ESM message container IE comprised in the attach request message and/or attach accept message, respectively.

8. A mobility management entity, MME, comprising:
means for receiving an attach request message transmitted by a user equipment, UE, wherein the attach request message comprises:
an indication to the MME that the UE supports an Evolved Packet System, EPS, Mobility Management, EMM, state EMM-REGISTERED without Packet Data Network, PDN, connection, and
an Evolved Packet System, EPS, Session Management, ESM, Dummy Message instead of a Packet Data Network, PDN, Connectivity Request message, wherein the ESM Dummy Message indicates to the MME that the UE requests attach to the network without establishment of a PDN connection; and
means for transmitting an attach accept message to the UE, wherein the attach accept message comprises:
an indication to the UE that the MME supports the EMM state EMM-REGISTERED without PDN connection, and
an ESM Dummy Message to indicate to the UE that the MME accepts the request of the UE to attach to the network without establishment of PDN connectivity;
wherein the ESM Dummy Message consists of:
a field for indicating a protocol discriminator;
a field for indicating an EPS bearer identity;
a field for indicating a procedure transaction identity; and
a field for indicating an ESM Dummy Message identity.

9. The MME of claim 8, wherein the MME is adapted to skip a default radio bearer setup procedure in response to said attach request message.

10. The MME of claim 8 or 9, wherein the attach request message is transmitted in a S1 Application Protocol, SlAP, initial UE message.

11. The MME of one of claims 8 to 10, wherein the attach accept message is transmitted in a S1AP downlink non-access stratum, NAS, transport message.

12. The MME of one of claims 8 to 11, wherein the ESM Dummy Message is comprised within an ESM message container IE comprised in the attach request message and/or attach accept message, respectively.

13. An attach request message for transmission by a user equipment, UE, within a 3GPP Long Term Evolution, LTE, based mobile communication system, the attach request message comprising:
an information element, IE, for indicating whether Evolved Packet System, EPS, Mobility Management, EMM, state EMM-REGISTERED without Packet Data Network, PDN, connection is supported by the UE, and
an IE comprising an Evolved Packet System, EPS, Session Management, ESM, Dummy Message instead of a Packet Data Network, PDN, Connectivity Request message, wherein the ESM Dummy Message indicates to the MME that the UE requests attachment to the network without establishment of PDN connectivity,
wherein the ESM Dummy Message consists of:
a field for indicating a protocol discriminator;
a field for indicating an EPS bearer identity;
a field for indicating a procedure transaction identity; and
a field for indicating an ESM Dummy Message identity.

14. An attach accept message for transmission by a mobility management entity, MME, within a 3GPP Long Term Evolution, LTE, based mobile communication system, the attach accept message comprising:
an information element, IE, for indicating whether Evolved Packet System, EPS, Mobility Management, EMM, state EMM-REGISTERED without Packet Data Network, PDN, connection is supported by the MME, and
an IE comprising an Evolved Packet System, EPS, Session Management, ESM, Dummy Message to indicate to the UE that the MME accepts a request of the UE to attach to the network without establishment of PDN connectivity,
wherein the ESM Dummy Message consists of:
a field for indicating a protocol discriminator;
a field for indicating an EPS bearer identity;
a field for indicating a procedure transaction identity; and
a field for indicating an ESM Dummy Message identity.

## Patentansprüche

1. Benutzerausrüstung, UE, umfassend:
ein Mittel zum Übertragen (1001) einer Verbindungsanforderungsnachricht an eine Mobilitätsverwaltungsentität, MME, wobei die Verbindungsanforderungsnachricht umfasst:
eine Angabe an die MME, dass die UE einen Evolved Paket System, EPS, Mobility Management-Zustand, EMM-Zustand, EMM-REGISTERED ohne Paketdatennetzwerkverbindung, PDN-Verbindung, unterstützt, und
eine Evolved Paket System, EPS, Session Management-Dummy-Nachricht, ESM-Dummy-Nachricht, anstelle einer Paketdatennetzwerkkonnektivitätsanforderungsnachricht, PDN-Konnektivitätsanforderungsnachricht, wobei die ESM-Dummy-Nachricht der MME angibt, dass die UE eine Verbindung mit dem Netzwerk ohne Herstellung einer PDN-Verbindung anfordert; und
ein Mittel zum Empfangen (1003) einer Verbindungsannahmenachricht, die von der MME übertragen wird, wobei die Verbindungsannahmenachricht umfasst:
eine Angabe an die UE, dass die MME den EMM-Zustand EMM-REGISTERED ohne PDN-Verbindung unterstützt, und
eine ESM-Dummy-Nachricht, die der UE angibt, dass die MME eine Anforderung der UE zur Verbindung mit dem Netzwerk ohne Herstellung einer PDN-Konnektivität annimmt;
wobei die ESM-Dummy-Nachricht besteht aus:
einem Feld zum Angeben eines Protokolldiskriminators;
einem Feld zum Angeben einer EPS-Träger-Identität;
einem Feld zum Angeben einer Prozedurtransaktionsidentität und
einem Feld zum Angeben einer ESM-Dummy-Nachrichten-Identität.

2. UE nach Anspruch 1, ferner umfassend ein Mittel zum Übertragen (1003) einer Verbindung-abgeschlossen-Nachricht an die MME, wobei die Verbindungabgeschlossen-Nachricht eine ESM-Dummy-Nachricht umfasst.

3. UE nach Anspruch 1 oder 2, ferner umfassend ein Mittel zum Empfangen einer Verbindungsablehnungsnachricht, umfassend ein ESM-Nachrichtencontainer-IE mit einer ESM-Statusnachricht.

4. UE nach Anspruch 3, wobei die ESM-Statusnachricht eine Ursache #97 "Nachrichtentyp nicht vorhanden oder nicht implementiert" angibt.

5. UE nach Anspruch 3 oder 4, wobei die Verbindungsablehnungsnachricht ein EMM-Ursachen-IE für einen EMM-Ursachen-Wert umfasst, der durch die MME auf #19 "ESM-Fehler" gesetzt wurde.

6. UE nach einem der Ansprüche 1 bis 5, ferner umfassend ein Mittel zum Empfangen einer Verbindungsablehnungsnachricht, umfassend ein EMM-Ursachen-IE für einen EMM-Ursachen-Wert, der durch die MME auf #15 "Keine geeigneten Zellen im Nachverfolgungsbereich" gesetzt wurde, um der UE anzugeben, dass die PDN-Konnektivität-Ablehnung auf der ESM-Ursache #29 abhängig von Betreiberrichtlinien beruht.

7. UE nach einem der Ansprüche 1 bis 6, wobei die ESM-Dummy-Nachricht innerhalb eines ESM-Nachrichtencontainer-IE enthalten ist, das in der Verbindungsanforderungsnachricht und/oder der Verbindungsannahmenachricht enthalten ist.

8. Mobilitätsverwaltungsentität, MME, umfassend:
ein Mittel zum Empfangen einer Verbindungsanforderungsnachricht, die durch eine Benutzerausrüstung, UE, übertragen wird, wobei die Verbindungsanforderungsnachricht umfasst:
eine Angabe an die MME, dass die UE einen Evolved Paket System, EPS, Mobility Management-Zustand, EMM-Zustand, EMM-REGISTERED ohne Paketdatennetzwerkverbindung, PDN-Verbindung, unterstützt, und
eine Evolved Paket System, EPS, Session Management-Dummy-Nachricht, ESM-Dummy-Nachricht, anstelle einer Paketdatennetzwerkkonnektivitätsanforderungsnachricht, PDN-Konnektivitätsanforderungsnachricht, wobei die ESM-Dummy-Nachricht der MME angibt, dass die UE eine Verbindung mit dem Netzwerk ohne Herstellung einer PDN-Verbindung anfordert; und
ein Mittel zum Übertragen einer Verbindungsannahmenachricht an die UE, wobei die Verbindungsannahmenachricht umfasst:
eine Angabe an die UE, dass die MME den EMM-Zustand EMM-REGISTERED ohne PDN-Verbindung unterstützt, und
eine ESM-Dummy-Nachricht, um der UE anzugeben, dass die MME eine Anforderung der UE zur Verbindung mit dem Netzwerk ohne Herstellung einer PDN-Konnektivität annimmt;
wobei die ESM-Dummy-Nachricht besteht aus:
einem Feld zum Angeben eines Protokolldiskriminators;
einem Feld zum Angeben einer EPS-Träger-Identität;
einem Feld zum Angeben einer Prozedurtransaktionsidentität und
einem Feld zum Angeben einer ESM-Dummy-Nachricht-Identität.

9. MME nach Anspruch 8, wobei die MME dafür konzipiert ist, ein Standardfunkträgereinrichtungsverfahren als Reaktion auf die Verbindungsanforderungsnachricht zu überspringen.

10. MME nach Anspruch 8 oder 9, wobei die Verbindungsanforderungsnachricht in einer S1 Application Protocol-Anfangs-UE-Nachricht, S1AP-Anfangs-UE-Nachricht, übertragen wird.

11. MME nach einem der Ansprüche 8 bis 10, wobei die Verbindungsannahmenachricht in einer S1AP-Downlink-Nichtzugangsschicht-Transportnachricht, S1AP-Downlink-NAS-Transportnachricht, übertragen wird.

12. MME nach einem der Ansprüche 8 bis 11, wobei die ESM-Dummy-Nachricht innerhalb eines ESM-Nachrichtencontainer-IE enthalten ist, das in der Verbindungsanforderungsnachricht und/oder der Verbindungsannahmenachricht enthalten ist.

13. Verbindungsanforderungsnachricht zur Übertragung durch eine Benutzerausrüstung, UE, innerhalb eines mobilen Kommunikationssystems auf Basis von 3GPP Long Term Evolution, LTE, die Verbindungsanforderungsnachricht umfassend:
ein Informationselement, IE, zum Angeben, ob ein Evolved Paket System, EPS, Mobility Management-Zustand, EMM-Zustand, EMM-REGISTERED ohne Paketdatennetzwerkverbindung, PDN-Verbindung, durch die UE unterstützt wird, und
ein IE, umfassend eine Evolved Paket System, EPS, Session Management-Dummy-Nachricht, ESM-Dummy-Nachricht, anstelle einer Paketdatennetzwerkkonnektivitätsanforderungsnachricht, PDN-Konnektivitätsanforderungsnachricht, wobei die ESM-Dummy-Nachricht der MME angibt, dass die UE eine Verbindung mit dem Netzwerk ohne Herstellung einer PDN-Konnektivität anfordert,
wobei die ESM-Dummy-Nachricht besteht aus:
einem Feld zum Angeben eines Protokolldiskriminators;
einem Feld zum Angeben einer EPS-Träger-Identität;
einem Feld zum Angeben einer Prozedurtransaktionsidentität und
einem Feld zum Angeben einer ESM-Dummy-Nachricht-Identität.

14. Verbindungsannahmenachricht zur Übertragung durch eine Mobilitätsverwaltungsentität, MME, innerhalb eines mobilen Kommunikationssystems auf Basis von 3GPP Long Term Evolution, LTE, die Verbindungsannahmenachricht umfassend:
ein Informationselement, IE, zum Angeben, ob ein Evolved Paket System, EPS, Mobility Management-Zustand, EMM-Zustand, EMM-REGISTERED ohne Paketdatennetzwerkverbindung, PDN-Verbindung, durch die MME unterstützt wird, und
ein IE, umfassend eine Evolved Paket System, EPS, Session Management-Dummy-Nachricht, ESM-Dummy-Nachricht, um der UE anzugeben, dass die MME eine Anforderung der UE zur Verbindung mit dem Netzwerk ohne Herstellung einer PDN-Konnektivität annimmt,
wobei die ESM-Dummy-Nachricht besteht aus:
einem Feld zum Angeben eines Protokolldiskriminators;
einem Feld zum Angeben einer EPS-Träger-Identität;
einem Feld zum Angeben einer Prozedurtransaktionsidentität und
einem Feld zum Angeben einer ESM-Dummy-Nachricht-Identität.

## Revendications

1. Équipement d'utilisateur (UE), comprenant :
un moyen permettant de transmettre (1001) un message de demande de connexion à une entité de gestion de mobilité (MME), le message de demande de connexion comprenant :
une indication indiquant à la MME que l'UE prend en charge un état de gestion de mobilité de système de paquet évolué (EPS) (EMM) EMM-REGISTERED sans connexion de réseau de données de paquet (PDN), et
un message fictif de gestion de session de système de paquet évolué (EPS) (ESM) au lieu d'un message de demande de connectivité de réseau de données de paquet (PDN), le message fictif ESM indiquant à la MME que l'UE demande une connexion au réseau sans l'établissement d'une connexion PDN ; et
un moyen permettant de recevoir (1003) un message d'acceptation de connexion transmis par la MME, le message d'acceptation de connexion comprenant :
une indication indiquant à l'UE que la MME prend en charge l'état EMM EMM-REGISTERED sans connexion PDN ; et
un message fictif ESM qui indique à l'UE que la MME accepte une demande de l'UE pour qu'il se connecte au réseau sans l'établissement d'une connectivité PDN ;
le message fictif ESM consistant en :
un champ pour indiquer un discriminateur de protocole ;
un champ pour indiquer une identité de porteuse EPS ;
un champ pour indiquer une identité de transaction de procédure ; et
un champ pour indiquer une identité de message fictif ESM.

2. UE selon la revendication 1, comprenant en outre un moyen permettant de transmettre (1003) un message d'achèvement de connexion à la MME, le message d'achèvement de connexion comprenant un message fictif ESM.

3. UE selon la revendication 1 ou 2, comprenant en outre un moyen permettant de recevoir un message de rejet de connexion comprenant un IE conteneur de message ESM avec un message de statut ESM.

4. UE selon la revendication 3, dans lequel le message de statut ESM indique une cause #97 « type de message non existant ou non mis en œuvre ».

5. UE selon la revendication 3 ou 4, dans lequel le message de rejet de connexion comprend un IE de cause EMM pour une valeur de cause EMM qui a été fixée par la MME sur #19 « Défaillance ESM ».

6. UE selon l'une des revendications 1 à 5, comprenant en outre un moyen permettant de recevoir un message de rejet de connexion comprenant un ID de cause EMM pour une valeur de cause EMM qui a été fixée par la MME sur #15 « Pas de cellules appropriées dans la zone de suivi » pour indiquer à l'UE que le rejet de connectivité PDN est dû à une cause ESM #29 soumise à des stratégies d'opérateur.

7. UE selon l'une des revendications 1 à 6, dans lequel le message fictif ESM est compris dans un IE conteneur de message ESM compris respectivement dans le message de demande de connexion et/ou le message d'acceptation de connexion.

8. Entité de gestion de mobilité (MME), comprenant :
un moyen permettant de recevoir un message de demande de connexion transmis par un équipement d'utilisateur (UE), le message de demande de connexion comprenant :
une indication indiquant à la MME que l'UE prend en charge un état de gestion de mobilité de système de paquet évolué (EPS) (EMM) EMM-REGISTERED sans connexion de réseau de données de paquet (PDN) ; et
un message fictif de gestion de session de système de paquet évolué (EPS) (ESM) au lieu d'un message de demande de connectivité de réseau de données de paquet (PDN), le message fictif ESM indiquant à la MME que l'UE demande une connexion au réseau sans l'établissement d'une connexion PDN ; et
un moyen permettant de transmettre un message d'acceptation de connexion à l'UE, le message d'acceptation de connexion comprenant :
une indication indiquant à l'UE que la MME prend en charge l'état EMM EMM-REGISTERED sans connexion PDN, et
un message fictif ESM pour indiquer à l'UE que la MME accepte la demande de l'UE pour qu'il se connecte au réseau sans l'établissement d'une connectivité PDN ;
le message fictif ESM consistant en :
un champ pour indiquer un discriminateur de protocole ;
un champ pour indiquer une identité de porteuse EPS ;
un champ pour indiquer une identité de transaction de procédure ; et
un champ pour indiquer une identité de message fictif ESM.

9. MME selon la revendication 8, la MME étant conçue pour ignorer une procédure d'établissement de porteuse radio par défaut en réponse audit message de demande de connexion.

10. MME selon la revendication 8 ou 9, dans laquelle le message de demande de connexion est transmis dans un message initial d'UE sur protocole d'application S1 (S1AP).

11. MME selon l'une des revendications 8 à 10, dans laquelle le message d'acceptation de connexion est transmis dans un message de transport par strate sans accès (NAS) en liaison descendante sur S1AP.

12. MME selon l'une des revendications 8 à 11, dans lequel le message fictif ESM est compris dans un IE conteneur de message ESM compris respectivement dans le message de demande de connexion et/ou le message d'acceptation de connexion.

13. Message de demande de connexion destiné à être transmis par un équipement d'utilisateur (UE) dans un système de communication mobile basé sur une évolution à long terme (LTE) 3GPP, le message de demande de connexion comprenant :
un élément d'information (IE) pour indiquer si un état de gestion de mobilité de système de paquet évolué (EPS) (EMM) EMM-REGISTERED sans connexion de réseau de données de paquet (PDN) est pris en charge par l'UE, et
un IE comprenant un message fictif de gestion de session de système de paquet évolué (EPS) (ESM) au lieu d'un message de demande de connectivité de réseau de données de paquet (PDN), le message fictif ESM indiquant à la MME que l'UE demande une connexion au réseau sans l'établissement d'une connectivité PDN,
le message fictif ESM consistant en :
un champ pour indiquer un discriminateur de protocole ;
un champ pour indiquer une identité de porteuse EPS ;
un champ pour indiquer une identité de transaction de procédure ; et
un champ pour indiquer une identité de message fictif ESM.

14. Message d'acceptation de connexion destiné à être transmis par une entité de gestion de mobilité (MME) dans un système de communication mobile basé sur une évolution à long terme (LTE) 3GPP, le message d'acceptation de connexion comprenant :
un élément d'information (IE) pour indiquer si un état de gestion de mobilité de système de paquet évolué (EPS) (EMM) EMM-REGISTERED sans connexion de réseau de données de paquet (PDN) est pris en charge par la MME, et
un IE comprenant un message fictif de gestion de session de système de paquet évolué (EPS) (ESM) pour indiquer à l'UE que la MME accepte une demande de l'UE pour qu'il se connecte au réseau sans l'établissement d'une connectivité PDN,
le message fictif ESM consistant en :
un champ pour indiquer un discriminateur de protocole ;
un champ pour indiquer une identité de porteuse EPS ;
un champ pour indiquer une identité de transaction de procédure ; et
un champ pour indiquer une identité de message fictif ESM.
